Europäisches Patentamt

European Patent Office

Office européen des brevets

(11) Numéro de publication: **0 683 462 A2**

## DEMANDE DE BREVET EUROPEEN

(21) Numéro de dépôt: **95200699.7**

(51) Int. Cl.6: **G06F 17/17**

(22) Date de dépôt: **22.03.95**

<table>
<tr><td>

Une requête en renumérotation de la revendication 19 en 18 a été présentée conformément à la règle 88 CBE. Il est statué sur cette requête au cours de la procédure engagée devant la division d'examen (Directives relatives à l'examen pratiqué à l'OEB, A-V, 3.).

(30) Priorité: **31.03.94 FR 9403848**

(43) Date de publication de la demande:
**22.11.95 Bulletin 95/47**

(84) Etats contractants désignés:
**DE FR GB IT**

(71) Demandeur: **LABORATOIRES D'ELECTRONIOUE PHILIPS 22, Avenue Descartes**

</td><td>

**F-94450 Limeil-Brévannes (FR)**

(84) **FR**

(71) Demandeur: **Philips Electronics N.V. Groenewoudseweg 1 NL-5621 BA Eindhoven (NL)**

(84) **DE GB IT**

(72) Inventeur: **Deville, Yannick Société Civile S.P.I.D., 156, Boulevard Haussmann F-75008 Paris (FR)**

(74) Mandataire: **Lottin, Claudine Société Civile S.P.I.D. 156, Boulevard Haussmann F-75008 Paris (FR)**

</td></tr>
</table>

(54) **Procédé et processeur pour construire une fonction linéaire par morceaux avec discontinuités éventuelles.**

(57) Procédé de traitement numérique d'une donnée variable (x) pour construire une fonction [f(x)] linéaire par morceaux ayant un nombre donné (L) de morceaux ($F_0$,.. $F_{L-1}$), et montrant éventuellement des discontinuités entre ces morceaux, caractérisé en ce qu'il comprend :
- la génération concomitante d'un nombre de sous-fonctions linéaires [$H_0(x)$... $H_{L-1}(x)$] égal au nombre (L) de morceaux ($F_0$... $F_{L-1}$) de la fonction [f(x)] à construire, parmi lesquelles unedite première sous-fonction linéaire [$H_0(x)$] en un morceau ($J_0$), et desdites sous-fonctions linéaires suivantes [$H_1(x)$... $H_{L-1}(x)$] en deux morceaux ($J'_i$, $J_i$) ayant des limites ($r_i$) entre ces deux morceaux qui coïncident respectivement avec les limites entre les morceaux adjacents de la fonction [f(x)] à construire,
- la sommation des contributions de toutes les sous-fonctions respectivement dans chaque intervalle ($I_u$) défini par les limites de chaque morceaux ($F_u$) de la fonction [f(x)] à construire.

Application : Réalisation de fonctions d'approximation de fonctions quelconques

FIG. 2

EP 0 683 462 A2

L'invention concerne un procédé de traitement numérique d'une donnée variable pour construire une fonction linéaire par morceaux ayant un nombre donné de morceaux, et montrant éventuellement des discontinuités entre ces morceaux.

L'invention trouve son application dans la génération de fonctions d'approximation de fonctions non linéaires continues ou non continues.

L'invention concerne aussi un processeur numérique et un processeur numérique neuronal mettant en oeuvre ce procédé, dans cette application, notamment pour générer des fonctions d'activation.

Un processeur numérique neuronal fait partie de systèmes complets connus sous l'appellation de réseaux de neurones. Les réseaux de neurones sont constitués d'automates non linéaires généralement connectés entre eux par des synapses auxquelles sont affectés des coefficients synaptiques.

Dans un type de réseaux très répandu, les neurones sont regroupés en couches successives, chaque neurone est connecté à tous les neurones de la couche suivante, l'information passant de la couche d'entrée aux couches suivantes (couches cachées) jusqu'à la couche de sortie.

Un neurone donné totalise l'ensemble des contributions fournies par les neurones qui lui sont connectés en amont, et délivre un potentiel neuronal. Les potentiels neuronaux doivent généralement être soumis à l'action d'une fonction d'activation non linéaire pour que le processeur puisse opérer correctement des décisions.

Les fonctions d'activation actuellement les plus répandues dans les processeurs neuronaux sont les fonctions sigmoïdes, car elles permettent d'obtenir une vitesse de convergence optimale au cours des étapes d'apprentissage.

Comme il n'est pas raisonnablement envisageable de générer une fonction sigmoïde avec un matériel simple, l'homme du métier s'est d'abord orienté vers l'approximation de la fonction sigmoïde par une fonction linéaire par morceaux.

Il est déjà connu de l'état de la technique, par la demande de brevet EP 0546624, un processeur numérique neuronal ayant des moyens pour synthétiser une fonction d'approximation d'une fonction sigmoïde au moyen d'une fonction linéaire par morceaux et pour synthétiser sa dérivée. Ce document ne permet pas de synthétiser des fonctions absolument quelconques, et notamment des fonctions montrant des discontinuités. En effet ces moyens incluent seulement la réalisation d'une fonction comprenant d'une part deux parties linéaires constantes de valeurs différentes $F_{min}$, $F_{max}$, et d'autre part une troisième partie intermédiaire qui peut être linéaire ou non linéaire, définie dans un intervalle donné, les valeurs inférieure et supérieure de cette troisième partie coïncidant respectivement avec l'une des valeurs constantes, à chaque extrémité de l'intervalle donné. Ainsi, est générée une fonction linéaire ou non linéaire simple limitée par deux segments de saturation. Dans l'intervalle donné, la fonction simple est choisie en relation avec la fonction non linéaire dont l'approximation doit être obtenue. Pour obtenir l'approximation d'une sigmoïde, cette troisième partie non constante peut être un polynome d'ordre 3, ou bien une rampe. Le polynome d'ordre 3 peut être réalisé matériellement à l'aide d'une table dans laquelle sont stockées des valeurs en nombre suffisant pour réaliser la fonction d'approximation non linéaire avec le pas voulu. La fonction rampe ne neccessite pas de table. Les parties linéaires constantes constituent en réalité des seuils qu'il faut d'abord rechercher, ce qui conduit à des calculs lents.

Les fonctions linéaires par morceaux connues de ce document cité sont en fait des fonctions linéaires saturant à chacune de leurs extrémités. On ne peut donc ainsi réaliser que l'approximation de fonctions continues ayant des pentes décroissantes et des asymptotes horizontales, dont les applications sont limitées.

Un but de l'invention est de fournir un procédé pour synthétiser avec une précision prédéterminée une fonction linéaire par morceaux : qui soit capable de s'appliquer à l'approximation de n'importe quelle fonction non linéaire continue ou non continue ; qui soit suffisamment simple pour être mise en oeuvre par une structure intégrable sur une puce ; qui permette d'effectuer le calcul avec une grande rapidité.

Ce but est atteint au moyen du procédé défini dans le préambule, caractérisé en ce qu'il comprend d'abord :

- la génération concomitante d'un nombre de sous-fonctions linéaires égal au nombre de morceaux de la fonction à construire, parmi lesquelles unedite première sous-fonction linéaire en un morceau, et desdites sous-fonctions linéaires suivantes en deux morceaux ayant des limites entre ces deux morceaux qui coïncident respectivement avec les limites entre les morceaux adjacents de la fonction à construire,

- la sommation des contributions de toutes les sous-fonctions respectivement dans chaque intervalle défini par les limites de chaque morceaux de la fonction à construire.

Ce procédé pourra s appliquer par exemple à synthétiser des fonctions d'activation, et en particulier des fonctions sigmoïdes ; des fonctions neuronales utilisables dans un réseau de neurones quelconque ; et toute fonction, d'une manière générale, continue, ou non continue.

L'invention est décrite ci-après en détail en référence avec les figures schématiques annexées, parmi lesquelles :

- la FIG.1 représente une fonction d'approximation f(x) linéaire par morceaux, avec discontinuité ;
- la FIG.2 illustre un procédé comprenant une pluralité de chaînes de traitement en parallèle, pour générer une fonction f(x) linéaire par morceaux avec discontinuités ;
- la FIG.3A représente une fonction $H_i(x)$ linéaire par morceaux, en 2 morceaux, avec discontinuité ; et la FIG.3B représente symboliquement, au moyen de blocs, une chaîne de traitement pour générer la fonction de la FIG.3A ;
- la FIG.4A représente une fonction $H_0(x)$ purement linéaire et la FIG.4B un bloc matériel simplifié $B_0$ pour générer cette fonction ;
- la FIG.5A représente une première fonction particulière $H_i(x)$ et la FIG.5B représente un bloc matériel $B_1$ à $B_{L-1}$ simplifié pour générer cette fonction : et les FIG.5C et 5D illustrent le cas dual du cas des FIG.5A et 5B ;
- la FIG.6A représente une seconde fonction particulière $H_i(x)$ et la FIG.6B représente un bloc matériel $B_1$ à $B_{L-1}$ simplifié, pour générer cette fonction : et les FIG.6C et 6D illustrent le cas dual du cas des FIG.6A et 6B ;
- la FIG.7A représente une troisième fonction particulière $H_i(x)$ et la FIG.7B représente un bloc $B_1$ à $B_{L-1}$ simplifié, pour générer cette fonction ; et les FIG.7C et 7D illustrent le cas dual du cas des FIG.7A et 7B ;
- la FIG.8 représente différentes fonctions $H_0(x)$ et $H_i(x)$ générées dans une configuration de chaînes de traitement opérant en parallèle selon la FIG.2 et concrétisées par les blocs matériels définis en relation avec la FIG.7B ;
- la FIG.9 représente une structure microprogrammable pour générer la fonction f(x) ;
- la FIG.10 représente un réseau de neurones pour générer la fonction f(x) linéaire par morceaux avec discontinuités éventuelles ;
- la FIG.11A représente la structure d'un neurone de la couche cachée du réseau de neurones et la FIG.11B représente le neurone de sortie ;
- les quatre FIG.12A à 12D représentent chacune une fonction $A_i(e)$ possible pour constituer la fonction d'activation incluse dans les neurones de la couche cachée du réseau de neurones ;
- les quatre FIG.13A à 13D représentent quatre structures pour générer respectivement les quatre fonctions d'activation $A_i(e)$ des FIG.12A à 12D ;

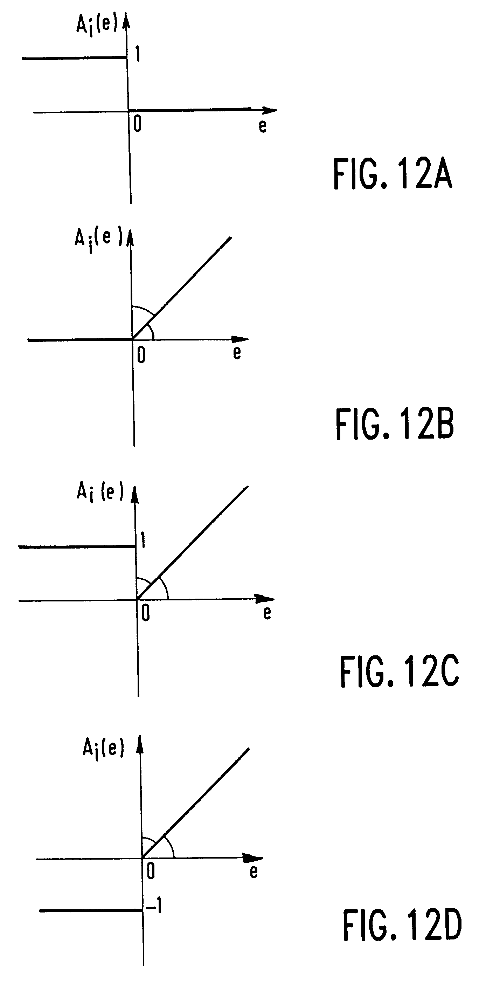

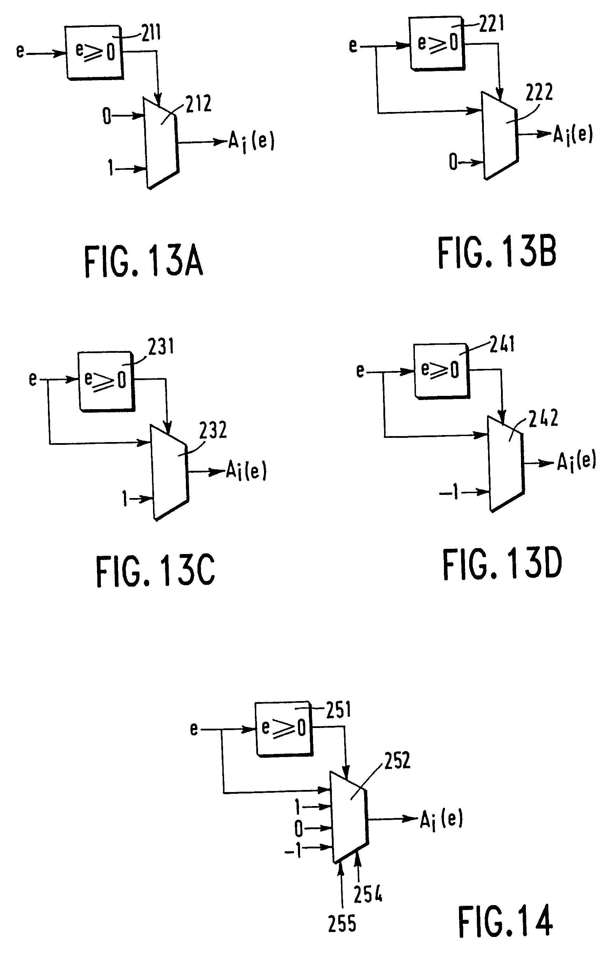

- la FIG.14 représente une structure générale capable de générer l'une ou l'autre des fonctions d'activation $A_i(e)$ représentées sur les FIG.12A à 12D.

## I - DEFINITION DE LA FONCTION f(x) A GENERER

L'invention concerne d'abord un procédé de traitement numérique d'une donnée variable pour générer une fonction linéaire par morceaux, non nécessairement continue.

L'invention concerne ensuite un processeur numérique classique, puis un processeur neuronal pour mettre en oeuvre cette méthode de traitement numérique.

La fonction linéaire par morceaux à générer est définie par f(x), x étant la donnée variable, et est représentée par un certain nombre de segments ayant des limites suivant l'axe des x communes deux à deux, sans exigence de continuité entre ces segments, ni sur les abscisses des limites de ces segments : ces limites sont ajustables et peuvent prendre n'importe quelles valeurs. Chacun des segments est défini par sa pente et son ordonnée à l'origine, et par les limites associées.

Cette fonction linéaire par morceaux trouve son application dans la réalisation de la fonction d'approximation de toute fonction, dans les cas les moins restrictifs, c'est-à-dire aussi bien si la fonction dont on cherche l'approximation possède des discontinuités ou non.

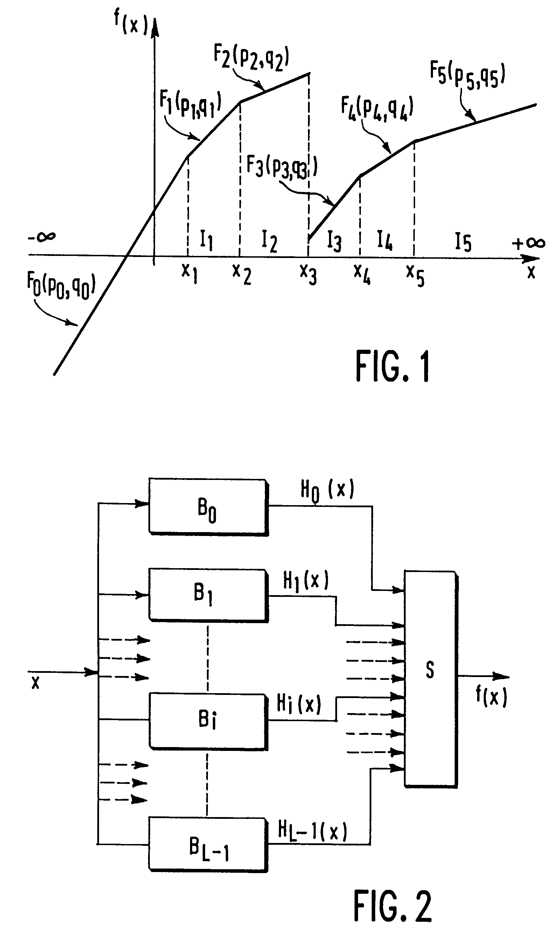

En référence avec la FIG.1, on définit d'abord la fonction f(x) de la manière la plus générale au moyen d'un jeu de paramètres qui comprend :

- le nombre de segments : m. A l'opposé des conditions imposées aux autres paramètres, on suppose le nombre m de segments toujours figé dans ce qui suit. L'extension au cas où l'on peut faire varier le nombre m de segments est à la portée de l'homme du métier ;
- les abscisses des limites de segments : $x_u$, dont les valeurs croissent strictement avec l'indice u. Dans le cas général, l'indice u varie de 1 à m-1, et les deux intervalles extrêmes sont non bornés. Les intervalles ainsi définis sont notés :

$$I_o = ]-\infty, x_1[$$
$$I_u = [x_u, x_{u+1}[ \text{ pour } u = 1 \text{ à } m-2$$
$$I_{m-1} = [x_{m-1}, +\infty[$$

Le domaine d'utilisation de la variable x est borné ou non : les segments extrêmes $F_0$ et $F_{m-1}$ de la fonction f(x) générée peuvent s'étendre à l'infini. Si les intervalles extrêmes sont bornés, on introduira $x_o$ et/ou $x_m$ comme limites extrêmes inférieures et supérieures respectivement.

- Sur chaque intervalle $I_u$, u = 0 à m-1, la fonction f(x) est définie par la pente $p_u$ et l'ordonnée à l'origine $q_u$ de la droite qui la supporte sur cet intervalle : $f(x) = p_u.x + q_u$.

En référence avec la FIG.1, on a représenté à titre d'exemple une fonction d'approximation f(x) simplifiée :

- qui comprend un nombre m = 6 segments de droite ou morceaux notés $F_0$, $F_1$, $F_2$, $F_3$, $F_4$, $F_5$ ;
- dont le premier intervalle $I_o$ s'étend de l'abscisse $-\infty$ à l'abscisse $x_1$ non comprise ; dans cet intervalle, le segment de droite $F_0$ a pour pente $p_o$, et pour ordonnée à l'origine $q_o$ ;
- dont l'intervalle $I_1$ s'étend de l'abscisse $x_1$ comprise, à l'abscisse $x_2$ non comprise ; dans cet intervalle le segment de droite $F_1$ a pour pente $p_1$ et pour ordonnée à l'origine $q_1$ ;
- de même pour $I_2$, $F_2$ ; $I_3$, $F_3$, $I_4$, $F_4$ ;
- dont le dernier intervalle est $I_5$ qui s'étend de l'abscisse $x_5$ comprise, à $+\infty$ ; le segment de droite correspondant $F_5$, dans cet intervalle, a pour pente $p_5$ et pour ordonnée à l'origine $q_5$ ;
- qui peut montrer des discontinuités, comme par exemple à l'abscisse $x_3$ entre $F_2$ et $F_3$.

## II - PROCEDE DE TRAITEMENT D'UNE VARIABLE x POUR CONSTRUIRE LA FONCTION D'APPROXIMATION f(x)

On propose en référence avec la FIG.2, un procédé pour construire la fonction d'approximation f(x) définie plus haut. Ce procédé comprend une pluralité de chaînes de traitement numérique de la donnée d'entrée, qui opèrent en parallèle et sont représentées chacune schématiquement par un bloc fonctionnel.

Ce procédé de traitement en parallèle a l'avantage de permettre soit une mise en oeuvre cablée classique, soit une mise en oeuvre neuronale. Ce procédé a aussi pour avantage de générer toute fonction voulue avec une très grande rapidité, du fait que les opérations qui permettent de générer les segments composant la fonction sont réalisées en parallèle.

La configuration des chaînes de traitement parallèles représentée de manière schématique sur la FIG.2, par L blocs montés en parallèle, référencés $B_i$, avec i = 0 à L-1, reçoivent tous la même variable d'entrée x, et fournissent chacun une sortie $H_i(x)$. Toutes ces sorties sont fournies à un bloc S, qui a pour fonction de calculer leur somme. La sortie du bloc S est la valeur de la fonction d'approximation f(x) obtenue par le procédé.

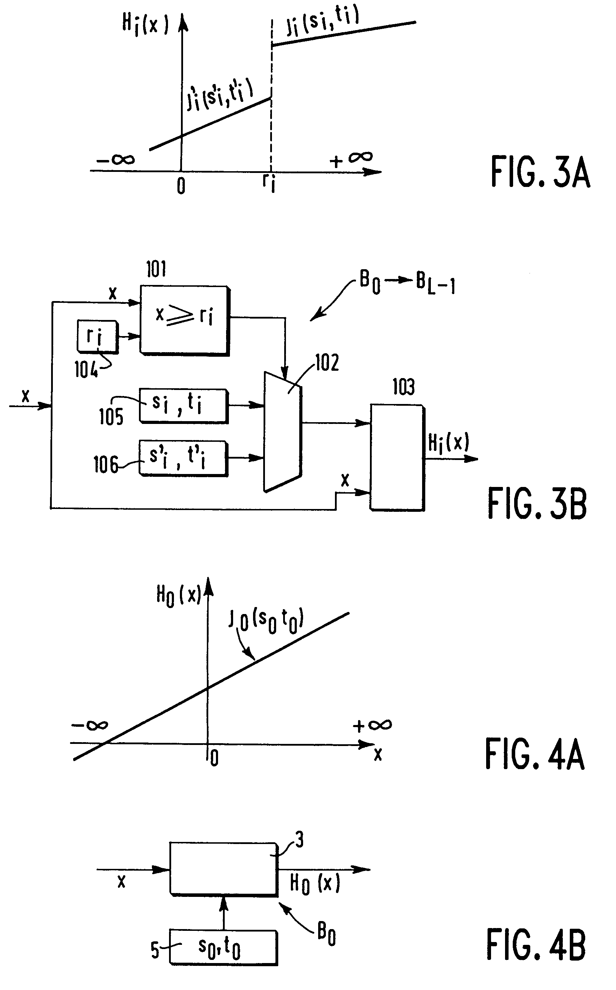

La fonction de transfert $H_i(x)$ de chaque bloc $B_i$ est définie, en référence avec la FIG.3A, comme le sous-ensemble des fonctions linéaires par morceaux, **dites sous-fonctions**, contenant au plus deux morceaux notés $J_i$ et $J'_i$, sans exigence de continuité entre ces morceaux. On utilise un ensemble adéquat de blocs $B_i$, pour obtenir en fin de procédé toute fonction f(x) linéaire par morceaux, sans exigence de continuité entre ces morceaux, contenant un nombre arbitraire de morceaux.

Plus précisément, en référence avec la FIG.3A, dans le cas général, la fonction de transfert $H_i(x)$ d'un bloc $B_i$ est définie par les relations **1a)** du TABLEAU I, où $r_i$ est l'abscisse de la limite commune aux deux segments $J_i$ et $J'_i$ appelée seuil. La fonction de transfert $H_i(x)$ est donc définie par 5 paramètres = $r_i$, $s_i$, $t_i$, $s'_i$, $t'_i$. Elle peut être générée par les opérations réalisées dans des blocs fonctionnels combinés pour former le bloc général $B_i$ représenté sur la FIG.3B. Dans ce bloc $B_i$ de la FIG.3B, les 5 paramètres de $H_i(x)$ représentant la fonction à deux morceaux $J_i$, $J'_i$, sont stockés dans des blocs fonctionnels référencés 105 pour $s_i$, $t_i$ ; 106 pour $s'_i$, $t'_i$ ; 104 pour $r_i$. Un bloc 101 compare l'entrée x au seuil $r_i$. Le résultat de cette comparaison contrôle un bloc ayant une fonction de multiplexage 102, qui transfère un couple de valeurs (s,t) au bloc 103. Ce couple est égal à $(s_i, t_i)$ ou $(s'_i, t'_i)$, suivant le résultat du test sur x. Le bloc 103 calcule alors la valeur de la fonction de transfert $H_i(x) = sx + t$ correspondante, dans laquelle s égale soit $s_i$ soit $s'_i$ ; et t égale soit $t_i$ soit $t'_i$, selon la relation 1a) ; et le bloc fonctionnel 103 fournit cette valeur $H_i(x)$ en sortie de ce bloc général $B_i$.

Dans toute la suite de la description de ce procédé de traitement en parallèle, on supposera que les trois conditions suivantes sont vérifiées :

* La fonction de transfert du premier bloc $B_0$ représentant schématiquement la première des chaînes de traitement en parallèle est strictement linéaire. Elle est donc définie par la relation 1b') du TABLEAU I. En effet, le cas général de la relation 1a) du TABLEAU I inclut le cas d'une fonction à un seul segment $J_0$, c'est-à-dire telle que $(s_i, t_i) = (s'_i, t'_i)$. Pour réaliser une telle fonction à un seul morceau, on supprime trois des paramètres, par exemple $r_i$, $s'_i$, $t'_i$. Ceci ne réduit pas la généralité : si on ne souhaite pas utiliser de telle fonction, il suffit de supprimer le bloc $B_0$, et de prendre $s_0 = 0$, $t_0 = 0$.

* Aucune des autres fonctions de transfert des blocs suivants $B_1$ à $B_{L-1}$ représentant schématiquement les autres chaînes de traitement n'est strictement linéaire, c'est-à-dire que chaque fonction $H_i(x)$ contient deux segments, ce qui s'exprime par : $(s_i, t_i) \neq (s'_i, t'_i)$ **pour i = 1 à L-1**. Ceci ne réduit pas la généralité : on n'utilise jamais deux blocs $B_i$ ayant une fonction de transfert strictement linéaire, car un unique bloc tel que $B_0$ peut réaliser toute fonction strictement linéaire.

* On exige que la valeur des différents seuils (ou limites) $r_i$ augmente strictement avec i (pour i = 1 à L-1). Ceci ne réduit pas la généralité : on n'utilise jamais deux blocs $B_i$ ayant la même valeur $r_i$, car un unique tel bloc peut réaliser la même fonction. La condition ci-dessus consiste alors simplement à affecter des indices i aux blocs en fonction de la valeur de leur seuil r.

La fonction de transfert de la configuration complète des chaînes de traitement formée d'un bloc $B_0$, et des blocs $B_1$ à $B_{L-1}$ montés en parallèle, comme représenté sur la FIG.2, peut s'écrire selon la relation 2) du TABLEAU I.

La fonction d'approximation f(x) s'exprime donc maintenant directement à l'aide des paramètres L, $r_i$, $s_i$, $t_i$, $s'_i$, $t'_i$ introduits ci-dessus, qu'on appelle **"jeu de paramètres pour configuration parallèle"**. L'avantage est que l'ensemble des fonctions f(x) ainsi réalisables quand on fait varier ces paramètres est égal à l'ensemble des fonctions recherchées qui sont linéaires par morceaux, sans exigence de continuité entre les segments. Pour définir d'abord chaque fonction f(x) telle que représentée sur la FIG.1, on a utilisé au départ les paramètres m, $x_u$, $p_u$, $q_u$ qu'on appelle **"jeu de paramètres usuels"**, qui définit les segments $F_0$ à $F_{m-1}$ l'un après l'autre, c'est-à-dire en série. On indique par les équations 3a), 3b), 3c) du TABLEAU I le lien qui existe entre le "jeu de paramètres usuels" et le "jeu de paramètres pour configuration parallèle" que l'on vient d'introduire.

Les seuils r correspondent aux abscisses inférieures d'extrémités d'intervalle I de même indice. La pente $p_u$, relative à un segment $F_u$ dans l'intervalle $I_u$ donné de la fonction d'approximation f(x), est égale à la somme des pentes $s_i$ des droites qui portent tous les premiers segments $J_i$ des fonctions de transfert $H_i(x)$, pour i allant de 0 à u, à laquelle on ajoute la somme des pentes $s'_i$ des droites qui portent tous les seconds segments $J'_i$ des fonctions de transfert $H_i(x)$ pour i allant de $u+1$ à l'indice m-1 du dernier segment $F_{m-1}$ de f(x). L'ordonnée à l'origine $q_u$ du même segment $F_u$ dans cet intervalle $I_u$ donné de la fonction d'approximation f(x) est égale à la somme des ordonnées à l'origine $t_i$ des droites qui portent tous les premiers segments $J_i$ des fonctions de transfert $H_i(x)$, pour i allant de 0 à u, à laquelle on ajoute la somme des ordonnées à l'origine $t'_i$ des droites qui portent tous les seconds segments $J'_i$ des fonctions de transfert $H_i(x)$ pour i allant de $u+1$ à l'indice m-1 du dernier segment $F_{m-1}$ de f(x).

Si, au lieu de déduire les paramètres usuels $p_u$ et $q_u$ des paramètres $s_i$, $s'_i$ $t_i$, $t'_i$, pour configuration parallèle, on veut faire le contraire, il apparaît que :

- pour déduire les $s_i$, $s'_i$ des $p_u$, on dispose de m équations à 2 m-1 inconnues. C'est-à-dire que, pour une fonction donnée à réaliser, il existe une infinité de valeurs possibles des paramètres à stocker physiquement. Donc, la structure matérielle à envisager pour mettre en oeuvre le procédé possède des degrés de liberté superflus : on fixe donc a priori certaines des valeurs $s_i$, $s'_i$ à stocker, pour pouvoir réduire les emplacements mémoires nécessaires à la structure matérielle, sans réduire la classe de fonctions que cette structure matérielle peut réaliser ;

- pour déduire les $t_i$, $t'_i$ des $q_u$, le même phénomène se produit, donc on fixe a priori certaines valeurs $t_i$, $t'_i$..

## III - PROCESSEUR A STRUCTURE PARALLELE NON NEURONALE

Selon l'invention, on propose maintenant un processeur mettant en oeuvre le procédé de traitement en parallèle selon la configuration de la FIG.2. Dans ce processeur, les blocs fonctionnels, schématisant les opérations du procédé, sont concrétisés par des blocs matériels simplement câblés.

En référence avec la FIG.2 qui montre la configuration des chaînes de traitement en parallèle schématisées par les blocs fonctionnels $B_0$ à $B_{L-1}$, en dehors du bloc $B_0$ dont la description de la structure matérielle va être faite ci-après et dont la fonction de transfert $H_0(x)$ est représentée par une unique droite $J_0$, tous les autres blocs de $B_1$ à $B_{L-1}$ sont matériellement absolument du même type, soit du type général présenté en référence avec la FIG.3B et ayant une fonction de transfert du type de la FIG.3A, soit de l'un des trois types simplifiés décrits ci-après. En réalisant tous les blocs $B_1$ à $B_{L-1}$ du même type, de l'un de ces quatre types, on peut réaliser une fonction d'approximation quelconque f(x) linéaire par morceaux continue ou non.

On décrit ci-après d'abord une structure matérielle générale pour bloc $B_1$ à $B_{L-1}$ et ensuite plus précisément, des structures matérielles simplifiées très avantageuses pour réaliser les blocs fonctionnels $B_0$ et $B_1$ à $B_{L-1}$.

Ces structures particulières simplifiées permettent de réaliser toutes les fonctions d'approximation f(x) possibles, avec des moyens matériels beaucoup plus avantageux que les moyens relatifs à un bloc $B_i$ général représenté sur la FIG.3B.

### III-a/Structure matérielle non simplifiée pour bloc général $B_i$.

En référence avec la FIG.3B, les blocs de stockage 105 pour $s_i$, $t_i$ ; 106 pour $s'_i$, $t'_i$ ; 104 pour $r_i$ sont des emplacements mémoires, ou bien des bus. Le bloc 101 est un comparateur et le bloc 102 est un multiplexeur, et le bloc 103 un multiplieur. Le bloc S de la FIG.2 peut être par exemple un arbre d'additionneur à deux entrées.

### III-b/Structure matérielle simplifiée pour bloc $B_0$

Pour réaliser la fonction de transfert $H_0(x)$ d'une droite selon la formulation 1b') du TABLEAU I, dont la courbe est représentée à titre d'exemple sur la FIG.4A, en référence avec la FIG.4B, on peut utiliser une structure matérielle de bloc élémentaire $B_0$ simple comprenant d'une part deux mémoires 5 stockant $s_0$ et $t_0$, et d'autre part un bloc 3 ayant la fonction du bloc 103 de la FIG.3B.

### III-c/Première structure simplifiée pour blocs $B_1$ à $B_{L-1}$

Cette première structure matérielle possible est fondée sur un premier cas particulier qui consiste à utiliser toutes les conditions énoncées jusqu'ici auxquelles on ajoute les conditions $t_i = 0$, $s'_i = 0$ pour i = 1 à m-1.

Les fonctions $H_i(x)$ qui en résultent sont définies par les relations **4a**) du TABLEAU I pour i ≠ 0, et sont illustrées à titre d'exemple par la courbe en deux segments de la FIG.5A. Cette courbe montre pour $x \geq r_i$. un premier segment $J_i$ de pente $s_i$, et d'ordonnée à l'origine $t_i = 0$ ; et un second segment $J'_i$ pour $x < r_i$, d'ordonnée à l'origine $t'_i$, et parallèle à l'axe des x. Ainsi le nombre de paramètres à stocker est réduit, et les calculs sont simplifiés et plus rapides que dans le bloc de la FIG.3B.

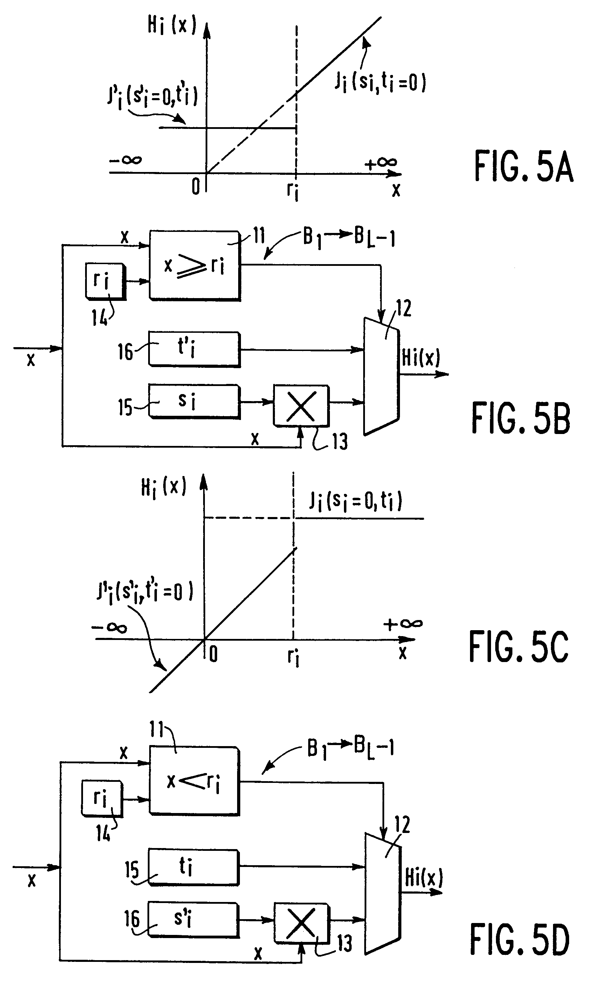

Une fonction $H_i(x)$ de ce type peut être mise en oeuvre par un bloc matériel $B_i$ simplifié représenté en FIG.5B. Il comprend un multiplieur 13 calculant la valeur $s_i.x$ ; et un bloc 11 qui réalise le test sur x en parallèle (ou en série si ces blocs ont des éléments communs). Le résultat de ce test commande un multiplexeur 12, qui fournit soit la sortie du multiplieur 13, soit la valeur $t'_i$.

Le lien entre les paramètres usuels et les paramètres pour configuration parallèle est donné par les équations 4b) à 4g) du TABLEAU I.

Le cas dual, $s_i = 0$, $t'_i = 0$ pour i = 1 à m-1, permet d'obtenir les mêmes propriétés, et se traite de la même manière. La courbe représentative de la fonction de transfert $H_i(x)$ correspondante est illustrée par la FIG.5C et peut alors être mise en oeuvre par un bloc matériel simplifié représenté sur la FIG.5D. Le bloc 13 est le multiplieur qui calcule la valeur $s'_i.x$. Le bloc 11 réalise le text sur x. Le résultat de ce test commande le multiplexeur 12 qui fournit soit la sortie du bloc 13, soit la valeur $t_i$.

### III-d/Deuxième structure simplifiée pour blocs $B_1$ à $B_{L-1}$

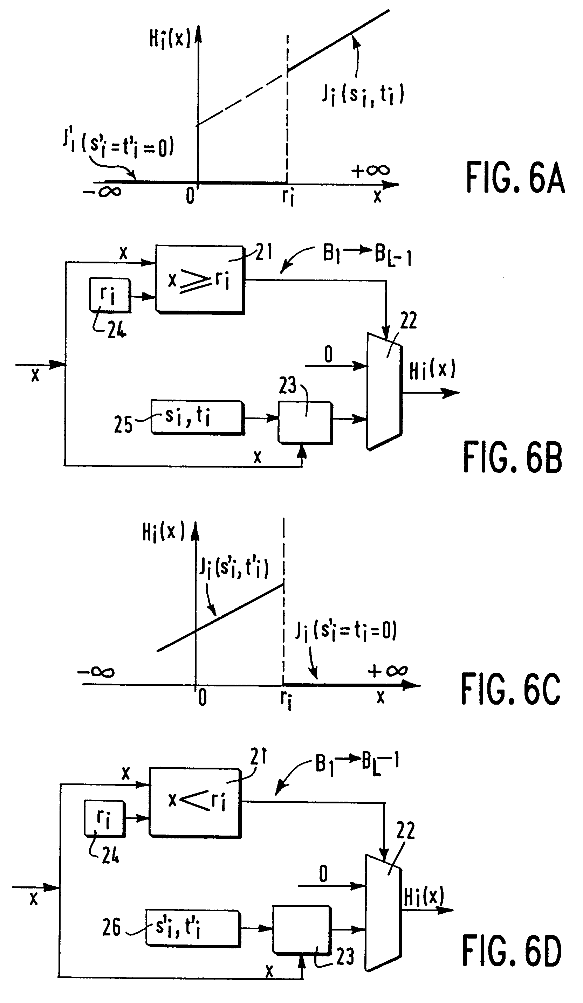

Cette deuxième structure matérielle possible est fondée sur un deuxième cas particulier qui consiste à utiliser toutes les conditions énoncées dans le cas général, auxquelles on ajoute les conditions : $s'_i = 0$, $t'_i = 0$ pour i = 1 à m-1. Les fonctions $H_i(x)$ qui en résultent sont définies par les relations **5a**) du TABLEAU I pour i ≠ 0 et sont illustrées à titre d'exemple par la courbe en deux segments de la FIG.6A. Cette courbe montre pour $x \geq r_i$ un premier segment $J_i$ de pente $s_i$, et d'ordonnée à l'origine $t_i$ ; et pour $x < r_i$, un second segment $J'_i$ confondu avec l'axe des x. Ainsi, le nombre des paramètres à stocker est réduit, et les calculs sont simplifiés et plus rapides que dans le bloc de la FIG.3B.

Une fonction $H_i(x)$ de ce type peut être mise en oeuvre par un bloc matériel $B_i$ simplifié illustré par la FIG.6B. Ce bloc $B_i$ comprend le bloc 23 qui calcule la valeur de $s_i.x + t_i$. En parallèle, ou en série si les blocs ont des éléments communs, le bloc 21 réalise le test sur x. Le résultat de ce test commande le multiplexeur 22 qui fournit soit la sortie du bloc 23, soit la valeur 0.

Le lien entre les paramètres usuels, et les paramètres pour configuration parallèle est donné par les équations 5b) à 5g) du TABLEAU I.

Le cas dual, $s_i = 0$, $t_i = 0$ pour $i = 1$ à m-1, permet d'obtenir les mêmes propriétés, et se traite de la même manière. La courbe représentative de la fonction de transfert $H_i(x)$ correspondante est illustrée par la FIG.6C et peut alors être mise en oeuvre de la manière indiquée sur la FIG.6D. Le bloc 23 calcule la valeur de $s'_i.x + t'_i$. Le bloc 21 réalise le test sur x. Le résultat de ce test commande le multiplexeur 22 qui fournit soit la sortie du bloc 23, soit la valeur 0.

### III-e/Troisième structure simplifiée pour blocs $B_1$ à $B_{L-1}$

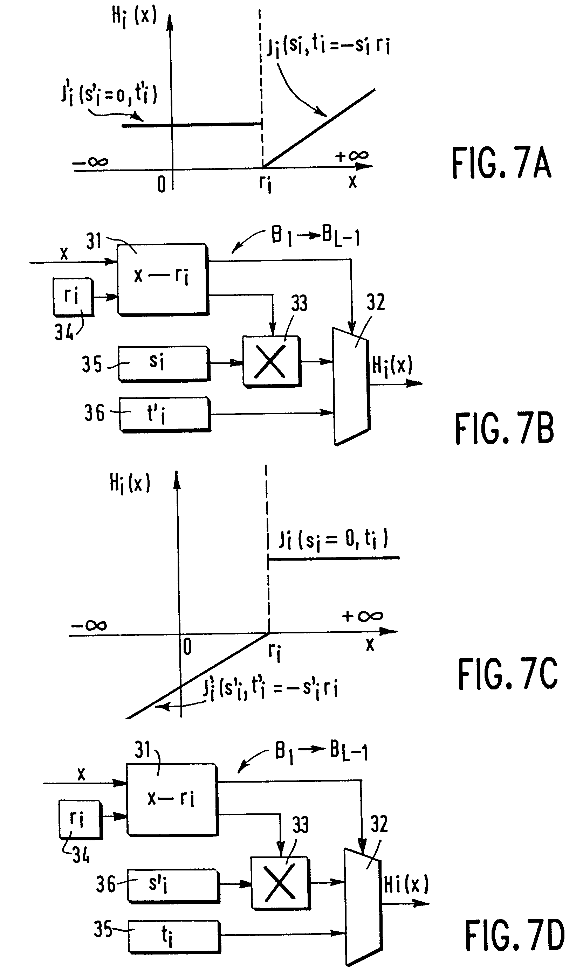

Cette troisième structure matérielle possible est fondée sur un troisième cas particulier qui consiste à utiliser toutes les conditions énoncées dans le cas général, auxquelles on ajoute les conditions $s'_i = 0$, $t_i = -s_i.r_i$ pour $i = 1$ à m-1, Les fonctions $H_i(x)$ qui en résultent sont définies par les relations **6a)** du TABLEAU I pour $i \neq 0$ et sont illustrées à titre d'exemple par la courbe en deux segments de la FIG.7A. Cette courbe montre, pour $x \geq r_i$, un premier segment $J_i$ de pente $s_i$ et d'ordonnée à l'origine $t_i = -s_i.r_i$ ; et pour $x < r_i$, un second segment $J'_i$ d'ordonnée à l'origine $t'_i$ parallèle à l'axe des x. Une caractéristique du premier segment $J_i$ est qu'il part de l'axe des x en $r_i$. A nouveau, le nombre de paramètres à stocker est réduit, et les calculs sont simplifiés et plus rapides que dans le cas général. Par rapport aux deux premiers cas particuliers, on utilise le même nombre de paramètres, mais on obtient un avantage pour certaines mises en oeuvres matérielles. En effet, quel que soit le cas qu'on considère, on doit réaliser le test $x \geq r_i$. La méthode généralement employée, et ceci s'applique donc aussi à tous les cas décrits avant celui-ci, consiste à calculer la différence $x-r_i$, puis à tester le signe de cette quantité. Dans la première et la seconde mises en oeuvre particulière, on était donc déjà amené à calculer toujours la valeur $x - r_i$. Dans cette troisième mise en oeuvre particulière, on calcule aussi cette valeur mais, ultérieurement, on l'utilise directement au lieu de x dans la suite des calculs, ce qui permet d'optimiser les bus de données utilisés. Le troisième cas particulier considéré ici est donc particulièrement avantageux.

Une fonction de transfert $H_i(x)$ de ce type peut être mise en oeuvre de la manière indiquée en FIG.7B. Le bloc 31 réalise le test $x - r_i$ suivant la méthode que l'on vient d'indiquer. Il fournit alors deux sorties : la sortie "du haut" est un signal binaire qui commande le multiplexeur 32 ; le signal "du bas" est un bus transmettant la valeur $x-r_i$ au bloc 33. Le bloc 33 est un multiplieur qui calcule la valeur $s_i.(x-r_i)$. Le multiplexeur 32 fournit soit la sortie du multiplieur 33, soit la valeur $t'_i$.

Le lien entre les paramètres usuels et les paramètres pour configuration parallèle est donné par les équations 6b) à 6g) du TABLEAU I.

Le cas dual, $s_i = 0$, $t'_i = -s'_i.r_i$ pour $i = 1$ à m-1, permet d'obtenir les mêmes propriétés ; et se traite de la même manière. La courbe représentative de la fonction de transfert $H_i(x)$ correspondante est illustrée par la FIG.7C. et peut alors être mise en oeuvre de la manière indiquée sur la FIG.7D. Le bloc 3 réalise le test $x \geq r_i$ et réalise la différence $x-r_i$. Ce bloc 31 fournit deux sorties, l'une est un signal binaire qui commande le multiplexeur 32. L'autre est un bus transmettant la valeur $x-r_i$ au bloc multiplieur 33, lequel calcule la valeur $s'_i(x-r_i)$. Ce multiplexeur 32 fournit soit la sortie du multiplieur 33, soit la valeur $t_i$.

Le TABLEAU I est un Tableau récapitulatif des fonctions de transfert des blocs simplifiés pour former une structure matérielle parallèle cablée, ainsi que l'indication des figures qui s'y rapportent, et des fonctions de transfert et figures des blocs de structure générale.

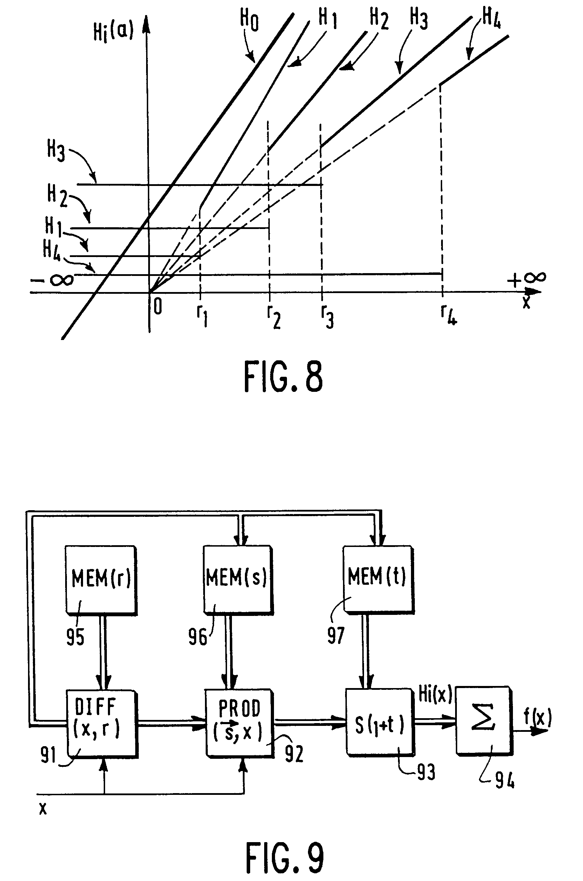

La FIG.8 montre comment une configuration parallèle selon la FIG.2 génère une fonction linéaire par morceaux éventuellement discontinue f(x). Dans cette illustration par la FIG.8, on a supposé que la configuration parallèle de la FIG.2 était mise en oeuvre au moyen d'un bloc matériel $B_0$ du type décrit en référence avec la FIG.4 et de blocs matériels $B_1$ à $B_{L-1}$ du type décrit en référence avec les FIG.5A et 5B, dit premier type de structure matérielle simplifiée.

Sur cette FIG.8 :

$$\text{Pour } x < r_1 \ H_0(x) = s_0 x + t_0, \ H_1(x) = t'_1, \text{ etc..}$$
$$\text{D'où } f(x) = s_0 x + (t_0 + t'_1 + t'_2 + t'_3 + t'_4)$$
$$\text{Pour } r_1 \leq x < r_2 \ H_0(x) = s_0 x + t_0, \ H_1(x) = s_1 x, \ H_2(x) = t'_2, \text{ etc..}$$
$$\text{D'où } f(x) = (s_0 + s_1)x + (t_0 + t'_2 + t'_3 + t'_4)$$
$$\text{Pour } r_2 \leq x < r_3 \ H_0(x) = s_0 x + t_0, \ H_1(x) = s_1 x, \ H_2(x) = s_2 x, \ H_3(x) = t'_3, \text{ etc..}$$
$$\text{D'où } f(x) = (s_0 + s_1 + s_2)x + (t_0 + t'_3 + t'_4)$$

etc... pour tous les intervalles entre les différents seuils $r_i$ conformément à la relation **2)** du TABLEAU I.

## IV - STRUCTURE MICROPROGRAMMEE A BASE PARALLELE

Il est possible de mettre en oeuvre le procédé de traitement illustré par la FIG.2, avec une structure microprogrammée. L'objectif devient le calcul par un programme d'une fonction f(x) du type précité. On peut par exemple transcrire ce programme dans une structure matérielle représentant les organes mis en jeu. Dans ce cas, on utilise du matériel réalisant les fonctions de base suivantes : test par rapport à un seuil, multiplication et addition. De plus, ce matériel a une structure parallèle.

Une telle structure est représentée sur la FIG.9 et fonctionne de la façon suivante. Un bloc 91 appelé DIF(x,r) compare deux vecteurs, dont les éléments ont pour indices $i = 1$ à $m-1$. Le premier de ces vecteurs a toutes ses composantes égales à l'entrée x. Le deuxième vecteur est le vecteur $\vec{r}$, qui est reçu d'une mémoire 95 appelée MEM(r), et dont chaque composante vaut $r_i$. Le bloc 91, DIFF(x,r) fournit en sortie un vecteur dont les éléments ont pour indices $i = 1$ à $m-1$. Chacun de ces éléments est une valeur binaire, indiquant le résultat du test $x \geq r_i$. Ce vecteur sert à adresser des mémoires respectivement 96 et 97, appelées MEM(s) et MEM(t). Ces mémoires 96 et 97 contiennent respectivement $s_0$ à $s_{m-1}$, $s'_1$ à $s'_{m-1}$ ; et $t_0$ à $t_{m-1}$, $t'_1$ à $t'_{m-1}$. Ces mémoires 96 et 97 fournissent alors les vecteurs $\vec{s}$ et $\vec{t}$. Chacun de ces vecteurs a m éléments, indicés par $i = 0$ à $m-1$. Les éléments du vecteur $\vec{s}$ ont les valeurs suivantes : l'élément 0 vaut $s_0$ ; pour $i \neq 0$ l'élément i vaut $s_i$ si le signal reçu du bloc 91, DIFF(x,r) indique que la condition $x \neq r_i$ est vérifiée, et $s'_i$ sinon. De même, les éléments du vecteur $\vec{t}$ ont les valeurs suivantes : l'élément 0 vaut $t_0$ ; pour $i \neq 0$ l'élément i vaut $t_i$ si le signal reçu du bloc 91, DIFF(x,r) indique que la condition $x \geq r_i$ est vérifiée, et $t'_i$ sinon. Ces deux vecteurs $\vec{s}$ et $\vec{t}$. sont utilisés de la façon suivante : le bloc 92 appelé PROD($\vec{s}$.x) génère un vecteur qui a m éléments, indicés par $i = 0$ à $m-1$. Chacun de ces éléments est le produit de la valeur x et de l'élément de $\vec{s}$ ayant le même indice. Ce vecteur est fourni au bloc 93 appelé S($+\vec{t}$). Ce dernier génère un vecteur qui a m éléments, indicés par $i = 0$ à $m-1$. Chacun de ces éléments est la somme de l'élément ayant le même indice reçu du bloc 92 PROD ($\vec{s}$.x), et de l'élément de $\vec{t}$ ayant le même indice. Chaque élément i ainsi obtenu a donc pour valeur $H_i(x)$ défini plus haut. Tous ces éléments sont fournis au bloc 94 appelé $\Sigma$. Ce dernier fait simplement la somme des $H_i(x)$ et fournit ainsi la valeur f(x) recherchée qui a la même forme que précédemment.

Sur la FIG.9, les blocs 91, 92, 93, c'est-à-dire DIFF(x,r), PROD ($\vec{s}$.x) et S($+\vec{t}$) sont représentés séparément, afin d'illustrer les fonctionnalités mises en jeu. En pratique, dans une solution microprogrammée, ce sont des blocs d'un même ALU à fonctionnement vectoriel. La description que l'on vient de donner correspond au cas général du point de vue de la valeur des paramètres $r_i$, $s_i$, $t_i$, $s'_i$, $t'_i$. On peut à nouveau introduire les mêmes cas particuliers que dans la description du processeur câblé à structure parallèle décrit précédemment. Alors, les équations sont simplifiées.

## V - PROCESSEUR NEURONAL

### V-a/Structure générale d'un processeur neuronal

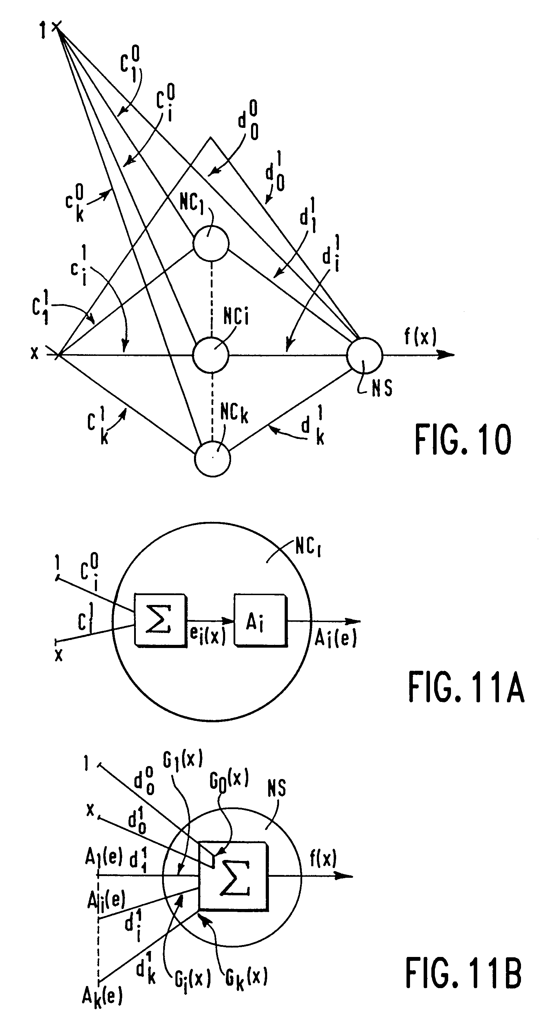

Une structure matérielle générale d'un processeur neuronal complet pour générer une fonction linéaire par morceaux éventuellement discontinue f(x) selon l'invention est représentée sur la FIG.10. Cette structure contient :
- k neurones cachés indicés par i, avec $i = 1$ à k, référencés $NC_1$, ... $NC_i$,... $NC_k$ ;
- et un unique neurone de sortie, référencé NS.

Une telle structure est adaptée aux applications dans lesquelles on privilégie la rapidité de fonctionnement, du fait de sa forme parallèle. De plus, elle est adaptée aux applications qui sont elles-mêmes neuronales.

La structure et l'équation de fonctionnement de chaque neurone caché $NC_i$ sont celles d'un neurone formel "standard", et sont illustrées par la FIG.11A. Chaque neurone caché donné $NC_i$ reçoit d'une part la variable d'entrée x avec un poids, ou coefficient synaptique d'entrée référencé $C_i^1$, et reçoit d'autre part un seuil $C_i^0$ qui peut être considéré comme étant le poids d'une entrée fixée à la valeur constante 1. Chaque neurone caché $NC_i$ réalise une somme pondérée, notée $\Sigma$, et calcule une sortie intermédiaire $e_i(x)$ selon la relation 1a' donnée dans le TABLEAU II.

Chaque neurone caché transfère cette somme pondérée formant la sortie intermédiaire $e_i(x)$ à travers une fonction d'activation notée $A_i$, et il calcule une sortie notée $A_i[e_i(x)]$. La fonction d'activation $A_i[e_i(x)]$ fera l'objet d'une description détaillée ultérieure.

La structure de l'unique neurone de sortie NS est illustrée par la FIG.11B. Il réalise une somme pondérée, notée $\Sigma$, des sorties $A_i[e_i(x)]$ de tous les neurones cachés $NC_i$, en utilisant des coefficients synaptiques $d_i^1$. Ce neurone de sortie reçoit en outre l'entrée x à travers un poids $d_o^1$ et la valeur constante 1 à travers un poids $d_o{}^o$. Ce neurone de sortie est linéaire, c'est-à-dire qu'il ne passe pas cette somme à travers une fonction d'activation (ou, de manière équivalente, cette fonction est l'identité). La sortie du neurone de sortie est la fonction f(x) que l'on cherche à générer.

Les poids de chaque neurone caché $NC_i$ sont indiqués sur la figure 11A, ainsi que les poids d'entrée du neurone de sortie NS.

Il reste alors à définir la fonction d'activation $A_i[e_i(x)]$ de chaque neurone caché. La méthode que l'on adopte est d'accepter comme ensemble de fonctions possibles, l'ensemble des fonctions linéaires par morceaux contenant 2 morceaux et éventuellement discontinues. La raison de ce choix est qu'en utilisant un ensemble adéquat de neurones, on peut obtenir au total toute fonction f(x) linéaire par morceaux, sans exigence de continuité entre les morceaux, contenant un nombre arbitraire de morceaux. Plus précisément, dans le cas général considéré ici, la fonction d'activation $A_i$ d'un neurone caché i est définie par les relations **7a)** du TABLEAU II. Dans ces relations, la variable e est la sortie intermédiaire $e_i(x)$ du sommateur $\Sigma$ de chaque neurone caché $NC_i$, $z_i$ est un seuil et $a_i$, $b_i$, $a'_i$, $b'_i$ sont des paramètres pour définir la fonction $A_i[e_i(x)]$. Dans le cas général, une telle fonction est fonc définie par 5 paramètres : $z_i$, $a_i$, $b_i$, $a'_i$, $b'_i$. On remarque que ces équations 7a) du TABLEAU II sont semblables aux relations 1a) du TABLEAU I utilisées dans la définition de la fonction $H_i(x)$ du procédé de traitement en parallèle. La seule différence est qu'on est ici obligé d'introduire de nouvelles notations, car on va continuer à utiliser les notations du TABLEAU I en leur conservant le même sens que précédemment. En effet, les fonctions de transfert $H_i(x)$ des blocs fonctionnels de la FIG.2 avaient directement pour entrée la variable x, alors que maintenant, dans le réseau de neurone de la FIG.10, les blocs appliquant les fonctions d'activation $A_i$ dans les neurones cachés $NC_i$, représentés sur la FIG.11A, ont pour variables d'entrée les valeurs $e_i(x)$ des sorties dites intermédiaires de chaque sommateur $\Sigma$.

Chaque fonction d'activation $A_i$ peut donc être mise en oeuvre d'une manière analogue aux fonctions précédemment décrites $H_i(x)$, c'est-à-dire comme décrit en référence avec la FIG.3B, en modifiant les notations.

Des relations **7a)** précédentes, on déduit les relations **7a')** du TABLEAU II.

Le neurone de sortie étant linéaire, la fonction de transfert du système complet peut s'écrire comme somme de différentes contributions, selon la relation **8)** du TABLEAU II. Dans cette expression **8)** :

- $G_0(x)$ est la contribution due aux connexions allant directement de l'entrée x et de la valeur constante 1 vers le neurone de sortie donnée par la relation **7b)** du TABLEAU II :
- pour tout i, i = 1 à K, $G_i(x)$ est la contribution due au neurone caché d'indice i. Dans tout ce qui suit, on suppose que pour tout i, i = 1 à K, les conditions suivantes sont vérifiées : première condition : $C_i{}^1 > 0$ ; et deuxième condition : $G_i(x)$ n'est pas linéaire, sinon on fusionnerait cette fonction avec $G_0(x)$ et on supprimerait le neurone caché correspondant. Alors, $G_i(x)$ est définie par les relations **9)** du TABLEAU II qui se déduisent des relations **7a') et 11d)** et dont on tire les quatre conséquences suivantes :

<u>Première conséquence</u> : ces expressions **9)** permettent de calculer la fonction linéaire par morceaux f(x) dès que l'on se donne les valeurs des paramètres du réseau de neurones.

<u>Deuxième conséquence</u> : ces expressions **9)** montrent que, du point de vue des équations, le réseau de neurones peut être identifié à un processeur à structure parallèle non neuronale du type vu précédemment. Cette identification se fait en remarquant que la fonction f(x) réalisée par le réseau de neurones est la somme d'une fonction linéaire $G_0(x)$, comme la fonction $H_0(x)$ introduite dans la structure parallèle non neuronale, et de k fonctions $G_i(x)$ pour i = 1 à k, qui sont finalement du même type que les fonctions $H_i(x)$ pour i = 1 à L-1 introduites dans la structure parallèle non neuronale. Du point de vue des équations, ce principe d'identification se traduit par les relations **10) et 11a) à 11h)** du TABLEAU II, et avec la condition introduite $c_i{}^1 > 0$. Ces équations réalisent donc les deux identifications suivantes :

* Les connexions allant directement des entrées x et 1 du réseau de neurones au neurone de sortie NS sont identifées au bloc $B_0$ du processeur à structure parallèle non neuronale.
* Chaque neurone caché $NC_i$ est identifié au bloc $B_i$.

Il faut cependant bien noter que : pour que cette identification soit ensuite utilisable, il faut que les indices des neurones cachés soient choisis de façon à ce que les valeurs $r_i$ augmentent strictement avec i, car l'étude relative au processeur à structure parallèle non neuronale supposait que cette relation était vérifiée. Cela ne restreint pas la généralité, mais consiste simplement à numéroter les neurones dans le bon ordre ; de toute façon, on utilise toujours des neurones fournissant des $r_i$ différents, car deux neurones ayant le même $r_i$ peuvent être fusionnés. Cette identification permet d'utiliser les propriétés suivantes :

<u>Troisième conséquence</u> : les équations **9)** du TABLEAU II permettent de passer des coefficients du réseau de neurones aux jeux de paramètres pour configuration parallèle, puis d'en déduire le jeu de paramètres usuels (c'est-à-dire $x_u$, $p_u$, $q_u$).

<u>Quatrième conséquence</u> : en ce qui concerne le passage du jeu de paramètres pour configuration parallèle vers les coefficients synaptiques du réseau de neurones :
* L'inversion du système d'équations précédent est évidente et fournit une solution unique pour les équations relatives à L, k et aux paramètres de $H_0(x)$ et $G_0(x)$.
* Pour les autres paramètres, l'inversion de $H_i(x)$ vers $G_i(x)$ est à réaliser séparément pour chaque valeur de i. On a alors 5 équations, à cause des 5 paramètres de $H_i$, à 8 inconnues qui sont les paramètres de $G_i(x)$ : 3 poids, et les 5 paramètres de $A_i$ ainsi que l'inéquation $C_i^1 > 0$.

Ces conditions, ainsi que la forme des équations, signifient que pour réaliser une fonction f(x) donnée, on dispose, à l'aide des coefficients du réseau de neurones, de plus de degrés de liberté que nécessaire. La conséquence pratique de ce résultat est qu'en fixant a priori la valeur de certains paramètres du réseau de neurones, on simplifie avantageusement sa structure matérielle sans réduire la classe des fonctions qu'il peut réaliser.

A cet effet, on décrit ci-après deux structures simplifiées pour neurone caché. Ces structures correspondent à des formes particulières de $G_i(x)$, et de $H_i(x)$ qui correspondent elles-mêmes à des structures matérielles simplifiées pour bloc $B_i$ du processeur à structure parallèle non neuronale. En combinant les équations de passages des paramètres usuels aux paramètres pour configuration parallèle, avec les équations présentées ci-après, on pourra donc faire le passage des paramètres usuels vers les coefficients du réseau de neurones à structure simplifiée.

## V-b/ Première structure simplifiée pour neurone caché.

Cette structure simplifiée pour neurone caché est définie en utilisant toutes les conditions fixées pour définir la structure générale, et en fixant en plus, a priori, certains des paramètres de chaque neurone caché $NC_i$, donc de chaque fonction $G_i(x)$, avec i = 1 à k. Parmi ces paramètres, on fixe certains des paramètres de $A_i$, sans fixer aucun poids. En fait, on fixe, pour tout i = 1 à k : $z_i = 0$, $a'_i = 0$, $b_i = 0$.

Le cas dual consiste à fixer, pour tout i = 1 à k : $z_i = 0$, $a_i = 0$, $b'_i = 0$. Ce cas dual permet d'obtenir les mêmes propriétés et mérite donc comme on l'a fait pour les structures non neuronales, d'être signalé ; mais il se traite de la même façon que ci-dessus et n'est donc pas présenté ici.

Avec ces nouvelles conditions, l'ensemble des fonctions $G_i(x)$ résultant d'un neurone caché, quand on fait varier l'ensemble des paramètres libres, est égal à l'ensemble des fonctions $H_i(x)$ qui sont du type défini dans la présentation des processeurs à structure parallèle non neuronale et qui vérifient en plus : $t_i = -s_i.r_i$ et $s'_i = 0$.

La fonction $H_i(x)$ correspondante est donnée par les équations **6a)** du TABLEAU I et correspond à la fonction de transfert de la troisième **structure matérielle simplifiée pour blocs $B_i$** du processeur à structure parallèle non neuronale.

Pour réaliser le passage entre paramètres pour configuration parallèle et paramètres usuels, on utilise donc les formules données dans le TABLEAU I en relation avec cette troisième structure matérielle simplifiée (FIG.7).

De plus, chaque fonction d'activation $A_i$ est alors définie par deux paramètres "libres" : $a_i$ et $b'_i$ : on assigne à ces paramètres des valeurs simples. La structure de chaque neurone caché est simplifiée en utilisant dans ce neurone l'une des quatre fonctions d'activations suivantes qui en résulte, choisie selon la fonction $H_i(x)$ à générer.

### Première fonction d'activation

En plus de $z_i = 0$, $a'_i = 0$, $b_i = 0$, on fixe : $a_i = 0$ et $b'_i = 1$.
Cette fonction d'activation a pour expression **12a)** du TABLEAU III-A, et est représentée sur la FIG.12A.
L'ensemble des fonctions $G_i(x)$ réalisables à partir de cette fonction $A_i(e)$ et de poids quelconques est tiré des relations **9) et 11d)** selon les expressions **12b)** du TABLEAU III-A. Ces expressions **12b)** s'identifient à l'ensemble des fonctions $H_i(x)$ 1a) telles que : $t_i = -s_i.r_i$ et $s'_i = 0$, et telles que, en plus : $s_i = 0$.

D'où il résulte que la fonction $H_i(x)$ est maintenant donnée par les relations 12c) du TABLEAU III-A déduites des équations **1a)**.

Pour une telle fonction d'activation, les équations donnant les paramètres encore libres de $H_i(x)$ en fonction des paramètres encore libres de $G_i(x)$ sont obtenues en identifiant les relations 12b) et 12c).

D'où il résulte que les équations inverses, pour $H_i(x)$ donnée, c'est-à-dire $r_i$ et $t'_i$, donnés, puisque tous les autres paramètres sont déjà fixés, sont données par les relations **13a) à 13c)** du TABLEAU III-A.

EP 0 683 462 A2

### Deuxième fonction d'activation

En plus de $z_i = 0$, $a'_i = 0$, $b_i = 0$ on fixe $a_i = 1$, $b'_i = 0$

Cette fonction d'activation a pour expression **14a)** du TABLEAU III-B et est représentée sur la FIG.12B.

L'ensemble des fonctions $G_i(x)$ réalisables à partir de cette fonction $A_i(e)$ et de poids quelconques est tiré des relations **9) et 11d)** selon les expressions 14b) du TABLEAU III-B. Ces expressions 14b) s'identifient à l'ensemble des fonctions $H_i(x)$ 1a) telles que $t_i = -s_i.r_i$ et $s'_i = 0$, et telles que en plus : $s_i \neq 0$ et $t'_i = 0$.

D'où il résulte que la fonction $H_i(x)$ est maintenant donnée par les expressions **14c)** du TABLEAU III-B déduites des équations **1a)**.

Pour une telle fonction d'activation, les équations donnant les paramètres encore libres de $H_i(x)$ en fonction des paramètres encore libres de $G_i(x)$ sont obtenues en identifiant les relations **14b)** et **14c)**.

D'où il résulte que les équations inverses, pour $H_i(x)$ donné, c'est-à-dire $r_i$ et $s_i$ donnés, puisque tous les autres paramètres sont déjà fixés, sont données par les relations 15a) à 15c') du TABLEAU III-B.

### Troisième fonction d'activation

En plus de $z_i = 0$, $a'_i = 0$, $b_i = 0$ on fixe : $a_i = 1$ et $b'_i = 1$.

Cette fonction d'activation a pour expression **16a)** du TABLEAU III-C, et est représentée sur la FIG.12C.

L'ensemble des fonctions $G_i(x)$ réalisables à partir de cette fonction $A_i(e)$ et de poids quelconques est tiré des relations **9) et 11d)**, selon les expressions **16b)** du TABLEAU III-C. Cet ensemble 16b) s'identifie à l'ensemble des fonctions $H_i(x)$ 1a), telles que : $t_i = -s_i.r_i$ et $s'_i = 0$, et telles que en plus : $s_i \neq 0$ et $t'_i \neq 0$ et $s_i/t'_i > 0$.

D'où il résulte que la fonction $H_i(x)$ est maintenant donnée par les expressions **16c)** déduites des équations **1a)** du TABLEAU III-C.

Pour une telle fonction d'activation, les équations donnant les paramètres encore libres de $H_i(x)$ en fonction des paramètres encore libres de $G_i(x)$ sont obtenues en identifiant les relations **16b)** et **16c)**.

D'où il résulte que les équations inverses, pour $H_i$ donné, c'est-à-dire $r_i$, $s_i$ $t'_i$ donnés, puisque tous les autres paramètres sont déjà fixés, sont données par les relations **17a), 17b), 17c)** du TABLEAU III-C.

### Quatrième fonction d'activation

En plus de $z_i = 0$, $a'_i = 0$, $b_i = 0$ on fixe $a_i = 1$ et $b'_i = -1$.

Cette fonction d'activation a pour expression **18a)** du TABLEAU III-D et est représentée sur la FIG.12D.

L'ensemble des fonctions $G_i(x)$ réalisables à partir de cette fonction $A_i(e)$ et de poids quelconques, est tiré des relations **9) et 11d)**, selon les expressions **18b)** du TABLEAU III-D. Cet ensemble **18b)** s'identifie à l'ensemble des fonctions $H_i(x)$ 1a) telles que $t_i = -s_i.r_i$ et $s'_i = 0$, et telles que en plus : $s_i \neq 0$ et $t'_i \neq 0$ et $s_i/t'_i < 0$.

D'où il résulte que la fonction $H_i(x)$ est maintenant donnée par les expressions **18c)** du TABLEAU III-D déduites des équations **1a)**.

Pour une telle fonction d'activation, les équations donnant les paramètres encore libres de $H_i(x)$ en fonction des paramètres encore libres de $G_i(x)$ sont obtenues en identifiant les relations **18b)** et **18c)**.

D'où il résulte que les équations inverses pour $H_i(x)$ donné c'est-à-dire $r_i$, $s_i$ $t'_i$ donnés, puisque tous les autres paramètres sont déjà fixés, sont données par les relations **19a), 19b), 19c)** du TABLEAU III-D.

Le TABLEAU II est un Tableau récapitulatif des fonctions de transfert $A_i[e_i(x)]$ et des fonctions $G_i(x)$ dans le cas général, et les TABLEAUX III sont des Tableaux récapitulatifs des 4 fonctions d'activation particulières et des fonctions $G_i(x)$ correspondantes.

Chacune des quatre fonctions d'activations particulières que l'on vient de présenter, permet de réaliser respectivement une fonction de transfert $H_i(x)$ correspondante du type de la fonction de transfert de la troisième structure matérielle simplifiée décrite dans le cadre du processeur à structure parallèle non neuronale. Pour réaliser chacune des fonctions $H_i(x)$ qui contribuent à générer la fonction par morceaux f(x), on utilise donc un neurone caché dont la fonction d'activation $A_i$ est une de ces quatre fonctions d'activation particulières, choisie selon les paramètres de cette fonction $H_i(x)$ à réaliser.

Maintenant, les neurones cachés du processeur neuronal comprennent chacun une structure matérielle simplifiée réalisant une de ces quatre fonctions d'activation $A_i[e(x)]$. D'où il résulte que la structure générale du processeur neuronal est simplifiée.

Des structures matérielles implémentant ces quatre fonctions $A_i[e_i(x)]$ correspondant aux courbes des FIG.12 sont représentées sur les FIG.13A à 13D respectivement. Leur fonctionnement se déduit directe-

11

ment de ce qui précède.

La FIG.13A montre un exemple d'implémentation de la fonction $A_i(e)$ représentée sur la FIG.12A, et correspondant à la relation **12a)** du TABLEAU III-A. Cette structure matérielle comporte un bloc de test 211 de e et un multiplexeur 212 qui reçoit une entrée 0 et une entrée 1, sélectionnées par le résultat du test, et qui fournit la sortie $A_i(e)$ **12a)**.

La FIG.13B montre un exemple d'implémentation de la fonction $A_i(e)$ représentée sur la FIG.12B et correspondant à la relation **14a)** du TABLEAU III-B. Cette structure matérielle comporte un bloc de test 221 sur e, et un multiplexeur 222 qui reçoit l'entrée e elle-même et une entrée 0 sélectionnées par le résultat du test sur e, et qui fournit la sortie $A_i(e)$ recherchée.

La FIG.13C montre un exemple d'implémentation de la fonction $A_i(e)$ représentée sur la FIG.12C et correspondant à la relation **16a)** du TABLEAU III-C. Cette structure matérielle comporte un bloc de test 231 sur e et un multiplexeur 232 qui reçoit l'entrée e elle-même et une entrée 1 sélectionnées par le résultat du test sur e et qui fournit la sortie $A_i(e)$ **16a)**.

La FIG.13D montre un exemple d'implémentation de la fonction $A_i(e)$ représentée sur la FIG.12D et correspondant à la relation **18a)** du TABLEAU III-D. Cette structure comporte un bloc de test 241 sur e, et un multiplexeur 242 qui reçoit l'entrée e elle-même et une entrée -1 sélectionnées par le résultat du test sur e, et qui fournit la sortie $A_i(e)$ **18a)**.

Il est aussi possible de réaliser une structure matérielle qui reçoit deux signaux binaires supplémentaires, qui définissent 4 modes de fonctionnement possibles, correspondant aux 4 fonctions d'activation à réaliser. Ceci permet d'utiliser la même structure matérielle pour tous les neurones cachés, en configurant la fonction d'activation de chacun d'entre eux en fonction de la fonction $H_i(x)$ à réaliser.

Cette structure comporte sur la FIG.14, un bloc 251 de test sur e et un multiplexeur 152. Ce multiplexeur est commandé par le résultat du test sur e, et par deux moyens de contrôle 254, 255. Ce multiplexeur a quatre entrées ; une première entrée e, une seconde entrée 1, une troisième entrée 0, une quatrième entrée -1. Selon les deux entrées utilisées parmi ces quatre entrées, sélectionnées à l'aide des moyens des contrôles 254, 255, on réalise l'une des configurations représentée sur les différentes FIG.13A à 13D.

### V-c/Variante de la première structure simplifiée pour neurone caché

Dans cette variante, les neurones cachés comprennent chacun une structure matérielle pour réaliser seulement une parmi deux fonctions d'activation :

- pour réaliser toute fonction $H_i(x)$ telle que $t_i = -s_i.r_i$ et $s'_i = 0$, et telle que en plus : $s_i = 0$ ou $t'_i = 0$, on utilise un neurone caché ayant pour fonction d'activation **l'une des deux premières fonctions d'activation 12a), 14a)**, citées en relation avec la première structure simplifiée pour neurone caché.
- pour réaliser les autres fonctions $H_i(x)$, telles que : $t_i = -s_i.r_i$ et $s'_i = 0$, et telles que en plus : $s_i \neq 0$ et $t'_i \neq 0$, définies par les relations **6a)** du TABLEAU I, on les décompose sous la forme : $H_i = H_i^1 + H_i^2$

Les deux nouvelles fonctions ainsi introduites sont obtenues en remplaçant respectivement : dans l'expression **12c)** du TABLEAU III-B, $H_i$ par $H_i^1$, et dans l'expression **14c)** du TABLEAU III-A, $H_i$ par $H_i^2$. On réalise ces deux nouvelles fonctions $H_i^1$ et $H_i^2$ à l'aide d'un neurone chacune, en utilisant **les deux premières fonctions d'activation 12a), 14a)**. Donc on réalise $H_i(x)$ à l'aide de deux neurones cachés au lieu d'un. **IV-d/Deuxième structure simplifiée pour neurone caché**

Il est possible de réaliser une étude similaire à ce qui précède en utilisant toutes les conditions fixées dans la structure générale, et en fixant en plus pour chaque neurone caché $NC_i$ : $z_i = 0$, $a'_i = 0$, $b'_i = 0$, avec i = 1 à K.

Le cas dual consiste à fixer, pour tout i = 1 à K, $z_i = 0$, $a_i = 0$, $b_i = 0$. Ce cas dual permet d'obtenir les mêmes propriétés et il se traite de la même façon.

Avec ces conditions, l'ensemble des fonctions $G_i(x)$ résultant d'un neurone caché, quand on fait varier l'ensemble des paramètres libres, est égal à l'ensemble des fonctions de transfert $H_i(x)$ de la **deuxième structure matérielle simplifiée pour blocs $B_i$** (FIG.6) décrite dans la présentation du processeur à structure parallèle non neuronale et qui vérifient en plus : $s'_i = 0$ et $t'_i = 0$. Pour réaliser le passage entre paramètres pour configuration parallèle et paramètres usuels, on utilise les formules données pour cette deuxième structure pour blocs $B_i$.

De plus, chaque fonction d'activation $A_i(e)$ est alors définie par deux paramètres "libres" : $a_i$ et $b_i$. Comme il est inutile de permettre à ces paramètres de prendre n'importe quelle valeur, on utilise donc uniquement les **quatre fonctions d'activation** définies plus haut pour simplifier la structure des neurones cachés du processeur neuronal.

Une variante de cette deuxième structure simplifiée pour neurone caché peut aussi être déduite suivant le principe développé dans la description de la première structure simplifiée pour neurone caché.

## VI/ STRUCTURES CONTRAINTES

Dans les processeurs, parallèles ou neuronaux, précédemment décrits, on peut prévoir en outre :

a) que les limites $x_u$ des segments ($F_0$... $F_{L-1}$) de la fonction $f(x)$ à construire sont contraintes. Par exemple les valeurs de ces limites $x_u$ c'est-à-dire les valeurs des seuils $r_i$ peuvent être figés et stockés dans une mémoire non réinscriptible (ROM). Ou dans un autre exemple, ces valeurs peuvent être non seulement figées, mais être en plus particulières, ce qui réduit encore la taille de la mémoire précitée.

b) que les discontinuités sont interdites dans la fonction $f(x)$ à construire. Dans ce cas, on applique une nouvelle condition aux paramètres de $H_i(x)$, ce qui permet en général de supprimer l'emplacement mémoire servant à stocker l'un des paramètres de $H_i(x)$.

## VII/ PROCESSEUR CALCULANT A LA FOIS LA FONCTION f(x) ET SA DERIVEE f'

Un processeur générant à la fois une fonction $f(x)$ linéaire par morceaux telle que définie dans l'exposé précédent, et sa dérivée f', est très utile pour l'application aux réseaux de neurones en phase d'apprentissage.

### VII-a) Processeur à structure parallèle non neuronale

Dans ce processeur, la fonction $f(x)$ est construite en réalisant la somme des contributions des fonctions $H_i(x)$. Donc la dérivée f' est construite en réalisant la somme des contributions des dérivées $H'_i$ des fonctions $H_i(x)$.

Pour fournir à la fois la fonction $f(x)$ et sa dérivée f', la structure décrite en référence avec la FIG.2 est modifiée de la façon suivante :

- un signal de contrôle est appliqué à chacun des blocs $B_i$ de cette structure parallèle, selon lequel chaque bloc $B_i$ fournit en sortie soit la fonction $H_i(x)$ soit sa dérivée $H'_i$,
- des moyens sont fournis pour générer la dérivée H' : on a décrit précédemment que, pour générer les fonctions $H_i(x)$ en relation avec les FIG.3, 5, 6, 7, les blocs $B_i$ comprennent des zones mémoires pour fournir des couples ($s_i$, $t_i$) ou ($s'_i$, $t'_i$), dont certains ont déjà de préférence des valeurs prédéfinies. Maintenant, la dérivée $H'_i$ comprend exclusivement les valeurs des pentes $s_i$ ou $s'_i$. Ces valeurs sont alors utilisées pour obtenir trois types de dérivées $H'_i$ relatives aux trois types de fonctions $H_i(x)$ sélectionnés comme avantageux, et générés respectivement par les trois structures matérielles de blocs $B_i$ simplifiées. Ces blocs $B_i$ génèrent donc les dérivées $H'_i$ en prenant en compte exclusivement ces pentes,
- un multiplexeur disposé en sortie de chaque bloc $B_i$, commandé par le signal de contrôle et recevant les valeurs de la fonction $H_i(x)$ et de sa dérivée $H'_i$. Ce multiplexeur peut éventuellement être combiné avec le multiplexeur déjà présent dans ce bloc $B_i$ concerné.

### VII-b) Processeur neuronal

Dans ce processeur, la fonction $f(x)$ est générée comme la somme des contributions des fonctions $G_i(x)$. Donc la dérivée f' de la fonction $f(x)$ est calculée comme la somme des contributions des dérivées $G'_i$ des fonctions $G_i(x)$.

Pour générer à la fois la fonction $f(x)$ et sa dérivée f', le processeur neuronal décrit plus haut est modifié de la manière suivante :

- le processeur neuronal reçoit un signal de contrôle pour fournir, selon ce signal, soit la fonction $f(x)$ soit sa dérivée f'.
- en mode de génération de la dérivée f', ce signal de contrôle agit sur les deux connexions d'entrée du neurone de sortie NS qui correspondent à la fonction $G_0$ pour fournir à la place de cette dernière une fonction $G'_0$ : à cet effet, d'abord l'entrée correspondant au poids ou coefficient synaptique n'apporte pas de contribution, ce qui est réalisé soit avec un poids nul, soit avec une entrée nulle ; et ensuite l'entrée correspondant au poids $d_o^1$ apporte une contribution seulement $d_o^1$, c'est-à-dire que le poids reste inchangé mais que l'entrée est 1 au lieu de x dans la version générant la fonction $G_0(x)$ :

- la génération des fonctions $G_i(x)$ avec $i \neq 0$ conduit à réaliser : $G_i(x) = d_i^1.C_i^1.A_i(C_i^1 x + C_i^0)$. Donc la dérivée de $G_i(x)$ est :

$$G'_i(x) = d_i^1.C_i^1.A_i'(C_i^1 x + C_i^0).$$

De préférence, ces fonctions dérivées $G'_i(x)$ sont générées de la façon suivante :
* le signal de contrôle est envoyé à tous les neurones cachés et, en mode de calcul de la dérivée f', la fonction d'activation $A_i(e)$ de chaque neurone caché est remplacée par sa dérivée $A'_i$ ;
* en sorties des neurones cachés, chaque poids de valeur $d_i^1$ pour le calcul de la fonction f(x) est remplacé par un poids de valeur $d_i^1.C_i^1$ qui peut être stocké par exemple dans une autre mémoire que les poids $d_i^1$. Cette autre mémoire peut être évitée, soit en prévoyant un bloc de calcul des nouveaux poids $d_i^1.C_i^1$ nécessaires, soit en conservant les poids $d_i^1$ mais en utilisant dans les neurones cachés des fonctions d'activation qui sont le produit de $C_i^1$ par les dérivées $A'_i$. Cependant la solution faisant appel à une mémoire supplémentaire est préférable car elle conduit à une meilleure standardisation des fonctions d'activation,
- des structures matérielles simplifiées permettant de générer les fonctions dérivées $A'_i$ sont déduites de l'enseignement relatif à la réalisation des fonctions dérivées $H'_i$ décrite précédemment et des fonctions simplifiées $A_i$.

14

## TABLEAU I

**Fonction de transfert de la configuration parallèle (FIG.2)**

$$f(x) = \sum_{i=0}^{i=L-1} H_i(x) \qquad \qquad 2)$$

$$m = L \text{ et } x_u = r_u \text{ pour } u = 1 \text{ à } L-1, \qquad \qquad 3a)$$

$$p_u = \sum_{i=0}^{i=u} s_i + \sum_{i=u+1}^{m-1} s_i' \text{ pour } u = 0 \text{ à } L-1 \qquad \qquad 3b)$$

$$q_u = \sum_{i=0}^{u} t_i + \sum_{i=u+1}^{m-1} t_i' \text{ pour } u = 0 \text{ à } L-1 \qquad \qquad 3c)$$

**Structure générale des blocs $B_0$ à $B_{L-1}$ (FIG.3)**

$$\begin{cases} \text{si } x \geq r_i, \ H_i(x) = s_i.x + t_i \\ \text{si } x < r_i, \ H_i(x) = s_i'.x + t_i' \end{cases} \qquad \qquad 1a)$$

**Structure simplifiée n°1 (FIG.4 et FIG.5)**

Bloc $B_0$ $\qquad H_0(x) = s_0.x + t_0,$ pour tout $x$ $\qquad \qquad 1b')$

Blocs $B_1$ à $B_{L-1}$ $\begin{cases} \text{si } x \geq r_i, \ H_i(x) = s_i.x \\ \text{si } x < r_i, \ H_i(x) = t_i' \end{cases} \qquad \qquad 4a)$

Equations de passage des paramètres usuels aux paramètres pour configuration parallèle et aux paramètres physiquement stockés.

$$p_u = \sum_{i=0}^{i=u} s_i, \text{ pour } u = 0 \text{ à } L-1 \qquad \qquad 4b)$$

$$q_u = t_o + \sum_{i=u+1}^{i=m-1} t_i' \text{ pour } u = 0 \text{ à } L-1 \qquad \qquad 4c)$$

$$s_0 = p_0 \qquad \qquad 4d)$$

$$s_i = p_i - p_{i-1} \text{ pour } i = 1 \text{ à } m-1 \qquad \qquad 4e)$$

$$t_0 = q_{m-1} \qquad \qquad 4f)$$

$$t'_i = q_{i-1} - q_i \text{ pour } i = 1 \text{ à } m-1 \qquad \qquad 4g)$$

TABLEAU I (suite)

**Structure simplifiée N°2 (FIG.4 et FIG.6)**

Bloc $B_0$ $\qquad H_0(x) = s_0 \cdot x + t_0$, pour tout x $\qquad$ 1b')

Blocs $B_1$ à $B_{L-1}$ $\begin{cases} \text{si } x \geq r_i, \ H_i(x) = s_i \cdot x + t_i \\ \text{si } x < r_i, \ H_i(x) = 0 \end{cases}$ $\qquad$ 5a)

Equations de passage des paramètres usuels aux paramètres pour configuration parallèle et aux paramètres physiquement stockés.

$$p_u = \sum_{i=0}^{i=u} s_i \quad \text{pour } u = 0 \text{ à } L-1 \qquad \text{5b)}$$

$$q_u = \sum_{i=0}^{i=u} t_i \quad \text{pour } u = 0 \text{ à } L-1 \qquad \text{5c)}$$

$s_0 = p_0$ 5d) $\qquad s_1 = p_i - p_{t-1}$ pour i = 1 à m-1 $\qquad$ 5e)

$t_0 = q_0$ 5f) $\qquad t_i = q_i - q_{t-1}$ pour i = 1 à m-1 $\qquad$ 5g)

**Structure simplifiée N°3 (FIG.4 et FIG.7)**

Bloc $B_0$ $\qquad H_0(x) = s_0 \cdot x + t_0$, pour tout x $\qquad$ 1b')

Bloc $B_1$ à $B_{L-1}$ $\begin{cases} \text{si } x \geq r_i, \ H_i(x) = s_i x - s_i r_i \\ \text{si } x < r_i, \ H_i(x) = t_i' \end{cases}$ $\qquad$ 6a)

Equations de passage des paramètres usuels aux paramètres pour configuration parallèle, et aux paramètres physiquement stockés.

$$p_u = \sum_{i=0}^{i=u} s_i \quad \text{pour } u = 0 \text{ à } L-1 \qquad \text{6b)}$$

$$q_u = t_0 - \sum_{i=1}^{i=u} s_i \cdot r_i + \sum_{i=u+1}^{m-1} t_{i'} \quad \text{pour } u = 0 \text{ à } L-1 \qquad \text{6c)}$$

$s_0 = p_0$ 6d) $\qquad s_i = p_i - p_{i-1}$ pour i = 1 à m-1 $\qquad$ 6e)

$$t_0 = q_{m-1} + \sum_{i=1}^{m-1} s_i \cdot r_i = q_{m-1} + \sum_{i=1}^{m-1} (p_i - p_{i-1}) \cdot r_i \qquad \text{6f)}$$

$$t'_i = q_{i-1} - q_i - s_i \cdot r_i = q_{i-1} - q_i - (p_i - p_{i-1}) \cdot r_i \quad \text{pour } i = 1 \text{ à } m-1 \quad \text{6g)}$$

**TABLEAU II**

Sortie intermédiaire du sommateur $\Sigma$ des neurones cachés $NC_i$

$$e_i(x) = C_i^1 x + C_i^0 \qquad\qquad \text{1a')}$$

Equation générale de la fonction d'activation $A_i$

$$\begin{cases} \text{si } e_i(x) \geq z_i, \ A_i[e_i(x)] \ = \ a_i(e_i(x)) + b_i \\ \text{si } e_i(x) < z_i, \ A_i[e_i(x)] \ = \ a_i'(e_i(x)) + b_i' \end{cases} \qquad \text{7a)}$$

$$\begin{cases} \text{si } e_i(x) \geq z_i, \ A_i[e_i(x)] \ = \ a_i.C_i^1.x + (a_i C_i^0 + b_i) \\ \text{si } e_i(x) < z_i, \ A_i[e_i(x)] \ = \ a_i'.C_i^1.x + (a_i' C_i^0 + b_i') \end{cases} \qquad \text{7a')}$$

$$f(x) = \sum_{i=0}^{i=K} G_i(x) \qquad\qquad \text{8)}$$

Si $e = z_i$, $x = r_i$ d'où $z_i = C_i^1 r_i + C_i^0$ et $r_i = \dfrac{z_i - C_i^0}{C_i^1}$ \qquad 11d)

Equations générales des fonctions $G_i(x)$ d'entrée du neurone de sortie NS

Pour $i = 0$, $G_0(x) = d_0^1.x + d_0^0$ 7b), $\qquad$ et pour $i = 1$ à K :

$$\begin{cases} \text{si } x \geq r_i, \ G_i(x) \ = \ d_i^1 A_i[e_i(s)] \ = \ d_i^1 a_i C_i^1 x + d_i^1 (a_i C_i^0 + b_i) \\ \text{si } x < r_i, \ G_i(x) \ = \ d_i^1 A_i[e_i(x)] \ = \ d_i^1 a_i' C_i^1 x + d_i^1 (a_i' C_i^0 + b_i') \end{cases} \text{9)}$$

en choisissant $C_i^1 > 0$

Equations d'identification d'un processeur à structure parallèle non neuronale et d'un réseau de neurones :

$H_i(x) = G_i(x)$ pour $i = 0$ à $L-1 = k$ pour tout x $\qquad$ 10)

$L \qquad = \qquad k + 1$ $\qquad\qquad$ 11a)

En identifiant 9) à 1a), et 7b) à 1b') il vient :

Pour $i = 0$ $\qquad s_0 = d_0^1$ $\qquad$ 11b), $\qquad t_0 = d_0^0$ $\qquad$ 11c)

Pour $i = 1$ à $K = L-1$,

$s_i = a_i \ c_i^1 \ d_i^1$ $\qquad$ 11e) $\qquad\qquad t_i = (a_i \ c_i^0 + b_i) d_i^1$ $\qquad$ 11f)

$s_i' = a_i' \ c_i^1 \ d_i^1$ $\qquad$ 11g) $\qquad\qquad t_i' = (a_i' \ c_i^0 + b_i') d_i^1$ $\qquad$ 11h)

## TABLEAU III-A

### Première fonction d'activation (FIG.12A et 13A)

Dans les équations $7'a$) et $9$) de $A_i[e_i(x)]$ et $G_i(x)$, on fixe :

$$z_i = 0, \ a'_i = 0, \ b = 0$$
$$a_i = 0, \ b'_i = 1$$

d'où
$$\begin{cases} \text{si } e \geq 0, \ A_i(e) = 0 \\ \text{si } e < 0, \ A_i(e) = 1 \end{cases} \qquad 12a)$$

et
$$\begin{cases} \text{si } x \geq r_i, \ G_i(x) = 0 \\ \text{si } x < r_i, \ G_i(x) = d_i^1 \end{cases} \qquad 12b)$$

avec
$$r_i = -\frac{C_i^0}{C_i^1} \qquad \text{tiré de } 11d)$$

Dans les équations $1a$) de $H_i(x)$, on fixe :
$$t_i = -s_i r_i, \ s'_i = 0, \ s_i = 0$$

d'où
$$\begin{cases} \text{si } x \geq r_i, \ H_i(x) = 0 \\ \text{si } x < r_i, \ H_i(x) = t_i' \end{cases} \qquad 12c)$$

En identifiant 12b) et 12c), on en déduit que :

avec $C_i^1 > 0$ \hfill 13a)

$$C_i^0 = -r_i C_i^1 \qquad 13b)$$

$$d_i^1 = -r_i C_i^1 \qquad 13c)$$

et avec $c_i^1 = 1$ \hfill 13a')

$$C_i^0 = -r_i \qquad 13b')$$

$$d_i^1 = t_i' \qquad 13c')$$

## TABLEAU III-B

### Seconde fonction d'activation (FIG.12B)

Dans les équations 7'a) et 9) de $A_i[e_i(x)]$ et $G_i(x)$, on fixe :

$$z_i = 0, \quad a'_i = 0, \quad b_i = 0 \quad \text{avec } i = 1 \text{ à } k$$

$$a_i = 1, \quad b'_i = 0$$

d'où

$$\begin{cases} \text{si } e \geq 0, & A_i(e) = e \\ \text{si } e < 0, & A_i(e) = 0 \end{cases} \qquad 14a)$$

et

$$\begin{cases} \text{si } x \geq r_i, & G_i(x) = C_i^1 d_i^1 x + C_i^0 \cdot d_i^1 \\ \text{si } x < r_i, & G_i(x) = \qquad 0 \end{cases} \qquad 14b)$$

avec

$$r_i = -\frac{C_i^0}{C_i^1} \qquad \text{tiré de } 11d)$$

Dans les équations 1a) de $H_i(x)$ on fixe :

$$t_i = -s_i r_i, \quad s'_i = 0, \quad s_i \neq 0, \quad t'_i = 0$$

$$\begin{cases} \text{si } x \geq r_i, & H_i(x) = s_i x - s_i r_i \\ \text{si } x < r_i, & H_i(x) = \qquad 0 \end{cases} \qquad 14c)$$

En identifiant 14b) et 14c), on en déduit que :

avec $C_i^1 > 0$ $\qquad\qquad$ 15a)

$$C_i^0 = -r_i C_i^1 \qquad\qquad 15b)$$

$$d_i^1 = \frac{s_i}{C_i^1} \qquad\qquad 15c)$$

et avec $c_i^1 = 1$ $\qquad\qquad$ 15a')

$$C_i^0 = -r_i \qquad\qquad 15b')$$

$$d_i^1 = s_i \qquad\qquad 15c')$$

TABLEAU III-C

## Troisième fonction d'activation FIG.12C

Dans les équations 7'a) et 9) de $A_i[e_i(x)]$ et $G_i(x)$ on fixe :

$$z_i = 0, \ a'_i = 0, \ b_i = 0 \qquad \text{avec } i = 1 \text{ à } k$$
$$a_i = 1, \ b'_i = 1$$

d'où
$$\begin{cases} \text{si } e \geq 0, \ A_i(e) \ = e \\ \text{si } e < 0, \ A_i(e) \ = 1 \end{cases} \qquad \text{16a)}$$

et
$$\begin{cases} \text{si } x \geq r_i, \ G_i(x) \ = d_i^1 C_i^1 x + d_i^1 . C_i^0 \\ \text{si } x < r_i, \ G_i(x) \ = \qquad d_i^1 \end{cases} \qquad \text{16b)}$$

avec
$$r_i = -\frac{C_i^0}{C_i^1} \qquad \text{tiré de 11d)}$$

Dans les équations 1a) de $H_i(x)$, on fixe :
$$t_i = -s_i r_i, \ s'_i = 0, \ s_i \neq 0, \ t'_i \neq 0, \ s_i/t'_i > 0$$

d'où
$$\begin{cases} \text{si } x \geq r_i, \ H_i(x) \ = s_i x - s_i r_i \\ \text{si } x < r_i, \ H_i(x) \ = \qquad t_i' \end{cases} \qquad \text{16c)}$$

En identifiant 16b) et 16c), il vient :

$$d_i^1 = t_i' \qquad \text{17c)}$$

$$C_i^1 = s_i/t_i' \qquad \text{17a)}$$

$$C_i^0 = -s_i . r_i / t_i' \qquad \text{17b)}$$

## TABLEAU III-D

### Quatrième fonction d'activation (FIG.12D)

Dans les équations 7'a) et 9) de $A_i[e_i(x)]$ et $G_i(x)$ on fixe :

$$z_i = 0, \ a'_i = 0, \ b_i = 0 \qquad \text{avec } i = 1 \text{ à } k$$

$$a_i = 1, \ b'_i = -1$$

d'où
$$\begin{cases} \text{si } e \geq 0, \ A_i(e) = e \\ \text{si } e < 0, \ A_i(e) = -1 \end{cases} \qquad 18a)$$

et
$$\begin{cases} \text{si } x \geq r_i, \ G_i(x) = d_i^1 C_i^1 x + d_i^1 . C_i^0 \\ \text{si } x < r_i, \ G_i(x) = -d_i^1 \end{cases} \qquad 18b)$$

avec $\qquad r_i = -\dfrac{C_i^0}{C_i^1} \qquad$ tiré de 11d)

Dans les équations 1a) de $H_i(x)$, on fixe :

$$t_i = -s_i r_i, \ s'_i = 0, \ s_i \neq 0, \ t'_i \neq 0 \text{ et } \ s_i/t'_i < 0$$

d'où
$$\begin{cases} \text{si } x \geq r_i, \ H_i(x) = s_i x - s_i r_i \\ \text{si } x < r_i, \ H_i(x) = t_i' \end{cases} \qquad 18c)$$

En identifiant 18b) et 18c), il vient :

$$d_i^1 = -t_i' \qquad 19c)$$

$$C_i^1 = -s_i/t_i' \qquad 19a)$$

$$C_i^0 = s_i r_i/t_i' \qquad 19b)$$

**Revendications**

1. Procédé de traitement numérique d'une donnée variable (x) pour construire une fonction [f(x)] linéaire par morceaux ayant un nombre donné (L) de morceaux ($F_0$,.. $F_{L-1}$), et montrant éventuellement des discontinuités entre ces morceaux, caractérisé en ce qu'il comprend :
   - la génération concomitante d'un nombre de sous-fonctions linéaires [$H_0(x)$... $H_{L-1}(x)$] égal au nombre (L) de morceaux ($F_0$... $F_{L-1}$) de la fonction [f(x)] à construire, parmi lesquelles unedite première sous-fonction linéaire [$H_0(x)$] en un morceau ($J_0$), et desdites sous-fonctions linéaires suivantes [$H_1(x)$... $H_{L-1}(x)$] en deux morceaux ($J'_i$, $J_i$) ayant des limites ($r_i$) entre ces deux morceaux qui coïncident respectivement avec les limites entre les morceaux adjacents de la fonction [f(x)] à construire,
   - la sommation des contributions de toutes les sous-fonctions respectivement dans chaque intervalle ($I_u$) défini par les limites de chaque morceaux ($F_u$) de la fonction [f(x)] à construire.

2. Procédé selon la revendication 1, caractérisé en ce que, la génération des sous-fonctions linéaires en un ou deux morceaux [$H_0(x)$.... $H_{L-1}(x)$] est effectué dans un nombre égal (L) de chaînes de traitement numérique ($B_0$,..., $B_{L-1}$) opérant de façon concomitante, dans lesquelles unedite première chaîne ($B_0$) de traitement génère la sous-fonction [$H_0(x)$] purement linéaire définie par sa pente ($s_0$) et son ordonnée à

21

l'origine ($t_0$), et dans lesquelles toutes les autres chaînes ($B_1$ à $B_{L-1}$) génèrent chacune une des sous-fonctions linéaires [$H_1(x)$ à $H_{L-1}(x)$] en deux morceaux ($J'_i$, $J_i$) définie par la pente ($s'_i$,$s_i$) et par l'ordonnée à l'origine ($t'_i$, $t_i$) de chacun des deux morceaux, et par la limite ($r_i$) entre ces deux morceaux, en ce que chaque limite ($r_i$) entre ces deux morceaux coïncide respectivement avec l'abscisse inférieure ($x_u$) d'extrémité d'un intervalle ($I_u$) de même indice ($i = u$) corrrespondant à un morceau ($F_u$) de la fonction à construire, en ce que la sommation des contributions des sous-fonctions [$H_0(x)$..., $H_{L-1}(x)$] fournit la pente ($p_u$) et l'ordonnée à l'origine ($q_u$) de chaque morceau particulier ($F_u$) de la fonction [$f(x)$] à construire, comme respectivement la somme des pentes ($s_i$) de tous lesdits premiers morceaux ($J_i$) des sous-fonctions [$H_i(x)$] d'indice allant de 0 à l'indice ($u$) dudit morceau particulier ($F_u$), augmentées respectivement de la somme des pentes ($s'_i$), et de la somme des ordonnées à l'origine ($t'_i$) de tous lesdits deuxièmes morceaux ($J'_i$) des sous-fonctions [$H_i(x)$] d'indice allant de l'indice plus un ($u+1$) dudit morceau particulier ($F_u$) au dernier morceau de la fonction [$F(x)$] à construire.

3. Procédé selon la revendication 2, caractérisé en ce qu'en dehors de la première chaîne de traitement ($B_0$) qui génère la sous-fonction [$H_0(x)$] purement linéaire, toutes les autres chaînes de traitement génèrent des sous-fonctions en deux morceaux de type identique particulier choisies parmi :
- un premier type particulier où undit premier morceau d'un côté de la limite ($r_i$) passe par l'origine et où l'autre dit deuxième morceau de l'autre côté de la limite est parallèle à l'axe de la donnée variable $x$),
- un second type particulier où undit premier morceau d'un côté de la limite ($r_i$) est quelconque et l'autre dit deuxième morceau de l'autre côté de la limite est confondu avec l'axe de la variable ($x$),
- un troisième type particulier où undit premier morceau d'un côté de la limite a la valeur de la limite ($r_i$) sur l'axe de la donnée variable ($x$), et l'autre dit deuxième morceau est parallèle.

4. Processeur numérique comprenant des moyens pour mettre en oeuvre un procédé de traitement d'une donnée variable ($x$) selon l'une des revendications 1 à 3, caractérisé en ce qu'il comprend :
- un nombre ($L$) de blocs matériels ($B_0$...$B_1$... $B_{L-1}$) montés en parallèle pour générer lesdites sous-fonctions linéaires [$H_0(x)$...$H_{L-1}(x)$ en un ou deux morceaux de façon concomitante, blocs parmi lesquels undit premier bloc ($B_0$) génère la sous-fonction ($H_0(x)$) purement linéaire définie par sa pente ($s_0$) et son ordonnée à l'origine ($t_0$), et parmi lesquels tous les autres blocs ($B_1$ à $B_{L-1}$) génèrent chacun une des sous-fonctions linéaires [$H_1(x)$ à $H_{L-1}(x)$] en deux morceaux ($J'_i$, $J_i$) définie par la pente ($s'_i$, $s_i$) et par l'ordonnée à l'origine ($t'_i$, $t_i$) de chacun des deux morceaux, et par la limite ($r_i$) entre ces deux morceaux.

5. Processeur numérique selon la revendication 4, caractérisé en ce que le premier bloc ($B_0$) qui génère ladite première sous-fonction [$H_0(x)$] strictement linéaire comprend :
- une première mémoire, ou un bus (5) qui fournit la pente ($s_0$) et l'ordonnée à l'origine ($t_0$) de l'unique morceau ($J_0$),
- et un multiplieur (3) qui reçoit en entrée la variable ($x$) et la sortie de la mémoire ou bus (5), et qui fournit la sous-fonction strictement linéaire [$H_0(x)$] en additionnant à l'ordonnée à l'origine ($t_0$) le produit de la pente ($s_0$) par la variable ($x$).

6. Processeur numérique selon l'une des revendications 4 ou 5, caractérisé en ce que chacun des blocs ($B_1$... $B_{L-1}$) de génération des sous-fonctions en deux morceaux montés en parallèle comprend :
- une première mémoire (106), ou un bus, pour fournir la pente et l'ordonnée à l'origine de l'un des morceaux dit premier morceau de la sous-fonction linéaire [$H_1(x)$... $H_{L-1}(x)$] à générer,
- une seconde mémoire (105), ou un bus, pour fournir la pente et l'ordonnée à l'origine de l'autre morceau dit second morceau ;
- une mémoire (104) ou un bus, pour fournir la limite ($r_i$) entre ces deux morceaux,
- un comparateur (101) qui compare la variable d'entrée ($x$) à la limite ($r_i$),
- un multiplexeur (102) contrôlé par le résultat issu du comparateur (101), pour fournir un couple de valeurs de pente et ordonnée à l'origine,
- un multiplexeur de sortie (103), qui reçoit la variable d'entrée ($x$) et la sortie du multiplexeur (102) et qui fournit en sortie la fonction [$H_i(x)$] à générer, en additionnant à chaque ordonnée à l'origine pour chaque morceau, le produit de la pente par la variable ($x$),

7. Processeur numérique selon la revendication 6, pour mettre en oeuvre le procédé selon la revendication 3, caractérisé en ce que chacun des blocs ($B_1$ à $B_{L-1}$) autre que le premier ($B_0$) sont identiques et en outre sont d'un type simplifié par la suppression du stockage dans la première ou la seconde mémoire d'une ou deux valeurs parmi les deux couples de paramètres de pente et ordonnée à l'origine des deux morceaux, les valeurs de pentes non stockées étant fixées à la valeur particulière zéro, et les valeurs d'ordonnée à l'origine non stockées étant fixées à la valeur particulière zéro ou à une valeur particulière fonction de la limite ($r_i$), pour générer la sous-fonction [$H_1(x)$..., $H_{L-1}(x)$] d'un type particulier selon les valeurs de pente et ordonnée à l'origine.

8. Processeur numérique neuronal, pour construire une fonction [f(x)] linéaire par morceaux, d'une variable (x), cette fonction ayant un nombre donné (L) de morceaux ($F_0$,... $F_i$... $F_{L-1}$) et montrant eventuellement des discontinuités entre ces morceaux, caractérisé en ce qu'il comprend :

- une couche cachée de neurones formée d'une pluralité de (k) neurones cachés ($NC_1$, ...., $NC_i$... $NC_k$) en nombre égal au nombre moins 1 de morceaux de la fonction [f(x)] à construire,
- et un neurone de sortie (NS), en ce que chaque neurone caché applique à la somme pondérée [$e_i(x)$] des entrées constituées par la variable (x) et par une constante (1), une fonction d'activation [$A_i(e_i(x)$] linéaire en deux morceaux montrant éventuellement une discontinuité entre ces morceaux, et en ce que le neurone de sortie (NS) effectue ensuite la somme pondérée, d'une part directement des entrées variable (x) et fixe (1) et d'autre part de toutes les sorties des (k) neurones cachés ($NC_i$), pour fournir la fonction linéaire par morceaux [f(x)] recherchée, les différentes limites ($z_i$) entre les deux morceaux des différentes fonctions d'activation [$A_i(e_i(x)$] étant des fonctions respectivement des limites ($x_u$) entre les morceaux ($F_u$) de cette fonction [f(x)] et étant égales en nombre.

9. Processeur numérique neuronal selon la revendication 8, caractérisé en ce que :
- chaque neurone caché ($NC_1$... $NC_k$) comprend un sommateur ($\Sigma$) qui effectue la somme de la variable d'entrée (x) affectée d'un coefficient synaptique ($C_i^1$) et d'une entrée fixe (1) affectée d'un coefficient synaptique ($C_i^0$), pour fournir une fonction intermédiaire ($e_i(x)$), et comprend un bloc ($A_i$) générant une fonction linéaire $A_i[e_i(x)]$ en deux morceaux, avec un seuil ou limite ($z_i$) entre ces morceaux et éventuellement une discontinuité, fonction dite d'activation qui est appliquée à la fonction intermédiaire,
- et le neurone de sortie (NS) comprend un sommateur ($\Sigma$) qui effectue la somme de la variable d'entrée (x) affectée d'un coefficient synaptique ($d_i^1$), et de l'entrée fixe (1) affectée d'un coefficient synaptique ($d_i^0$), ainsi que des sorties [$A_i(e_i(x))$] des (k) neurones cachés affectés chacun d'un coefficient synaptique ($d_i^1$), pour fournir la fonction [f(x)] linéaire par morceaux avec éventuellement des discontinuités.

10. Processeur numérique neuronal selon la revendication 9, caractérisé en ce que la sommation pondérée de la variable d'entrée (x) et de l'entrée fixe (1) par le sommateur ($\Sigma$) du neurone de sortie est identifiable à la fonction du premier bloc ($B_0$) du processeur numérique selon la revendication 5.

11. Processeur numérique neuronal selon la revendication 10, caractérisé en ce que la génération d'une fonction d'activation [$A_i(e_i(x)$] pour chaque neurone caché ($NC_i$) est identifiable à un facteur près à la fonction d'un bloc ($B_i$ avec i = 1 à L-1) autre que le premier, du processeur numérique selon l'une des revendications 6 ou 7.

12. Processeur numérique neuronal selon la revendication 11, caractérisé en ce que dans un des neuronces cachés la fonction d'activation [$A_i(e_i(x)$] linéaire en deux morceaux est égale à zéro si la fonction intermédiaire [$e_i(x)$] est supérieure ou égale à 0, et est égale à 1 si la fonction intermédiaire est inférieure à 0, et en ce que pour générer cette fonction d'activation [$A_i(e_i(x)$] dans le neurone caché, le bloc ($A_i$) comprend un bloc de test (211) de e(x) par rapport à zéro, et un multiplexeur (212), qui reçoit une entrée 0 et une entrée 1, qui est commandé par le résultat du bloc de test (211), et qui fournit à sa sortie la fonction [$A_i(e_i(x)$] recherchée.

13. Processeur numérique neuronal selon la revendication 11, caractérisé en ce que dans un des neurones cachés la fonction d'activation [$A_i(e_i(x)$] linéaire en deux morceaux est égale à la fonction intermédiaire [$e_i(x)$] si cette dernière est supérieure ou égale à 0, et est égale à 0 si la fonction intermédiaire [$e_i(x)$] est inférieure à 0, et en ce que pour générer cette fonction d'activation [$A_i(e_i(x)$] dans le neurone caché, le bloc ($A_i$) comprend un bloc de test (211) de e(x) par rapport à zéro, et un multiplexeur (222), qui reçoit l'entrée e(x) elle-même et une entrée zéro, qui est commandé par le résultat du bloc de test (221), et qui fournit à sa sortie la fonction [$A_i(e_i(x)$] recherchée.

14. Processeur numérique neuronal selon la revendication 11, caractérisé en ce que dans un des neurones cachés la fonction d'activation [$A_i(e_i(x)$] en deux morceaux est égale à la fonction intermédiaire [$e_i(x)$] si cette dernière est supérieure ou égale à 0, et est égale à 1 si la fonction intermédiaire [$e_i(x)$] est inférieure à 0, et en ce que pour générer cete fonction d'activation [$A_i(e_i(x)$] dans le neurone caché, le bloc ($A_i$) comprend un bloc de test (231) de e(x) par rapport à zéro, et un multiplexeur (232), qui reçoit l'entrée e(x) elle-même et une entrée égale à 1, qui est commandé par le résultat du bloc de test (231), et qui fournit à sa sortie la fonction [$A_i(e_i(x)$] recherchée.

15. Processeur numérique neuronal selon la revendication 11, caractérisé en ce que dans un des neurones cachés, la fonction d'activation [$A_i(e_i(x)$] en deux morceaux est égale à la fonction intermédiaire si cette dernière est supérieure ou égale à 0, et est égale à -1 si la fonction intermédiaire [$e_i(x)$] est inférieure à 0, et en ce que pour générer cette fonction d'activation [$A_i(e_i(x)$] dans le neurone caché, le bloc ($A_i$) comprend

un bloc de test (241) de e(x) par rapport à zéro, et un multiplexeur (242), qui reçoit l'entrée e(x) elle-même et une entrée égale à -1, qui est commandé par le résultat du bloc de test (241), et qui fournit à sa sortie la fonction [$A_i(e_i(x)$] recherchée.

16. Procédé selon la revendication 1, caractérisé en ce que pour construire :

- d'une part la fonction [f(x)] linéaire par morceaux avec discontinuités éventuelles on réalise la somme des contributions des fonctions linéaires en un ou deux morceaux [H(x)] ;
- et d'autre part la fonction [f'] dérivée de cette fonction [f(x)], on réalise aussi la somme des contributions des fonctions [$H'_i$] dérivées de ces fonctions [$H_i(x)$] en un ou deux morceaux.

17. Processeur numérique selon l'une des revendications 4 à 7, caractérisé en ce que pour construire également la fonction dérivée [f'] de la fonction linéaire par morceaux f(x), il comprend en outre :

- un signal de contrôle appliqué à chacun des blocs ($B_i$) de la structure de blocs parallèles, de manière que, selon ce signal, le bloc concerné fournit soit une fonction [$H_i$] linéaire en un ou deux morceaux, soit la fonction dérivée ($H'_i$) de cette fonction particulière.
- des moyens de sélection, pour sélectionner en mode calcul de dérivée dans les zones mémoires uniquement les pentes ($s_0$, $s_i$, $s'_i$) des morceaux des sous-fonctions [$H_i(x)$] constituant les dérivées ($H'_i$) de ces fonctions [$H_i(x)$],

19. Processeur neuronal selon l'une des revendications 8 à 15, caractérisé en ce que, pour construire d'une part la fonction [f(x)] linéaire par morceaux avec discontinuités éventuelles il comprend la somme pondérée des contributions des fonctions d'activation ($A_i[e(x)]$) des neurones cachés et d'un seuil, et en ce que pour construire en outre la fonction [f'] dérivée de cette fonction [f(x)], il comprend la somme pondérée des dérivées ($A'_i$) de ces fonctions d'activation et d'un seuil, et en ce que, pour construire à la fois la fonction linéaire par morceaux [f(x)] et sa dérivée [f'], il comprend en outre un signal de contrôle pour fournir selon ce signal soit la fonction à construire [f(x)], soit sa dérivée [f'],

- qui agit sur les connexions directes entre l'entrée variable (x), l'entrée fixe (1) et le sommateur ($\Sigma$) du neurone de sortie pour fournir en mode dérivée, la dérivée de ces signaux à sommer,
- qui agit sur les fonctions d'activation des neurones cachés ($NC_i$) pour fournir la dérivée ($A'_i$) des fonctions d'activation ($A_i[e(x)]$),
- et qui agit sur les coefficients synaptiques d'entrée du neurone de sortie (NS) pour remplacer les coefficients utiles au calcul de la fonction [f(x)] par des coefficients utiles au calcul de sa dérivée [f'] provenant d'une autre mémoire.

FIG. 1

FIG. 2

$H_i(x)$

$J_i(s_i, t_i)$

$J_i^1(s_i^1, t_i^1)$

$-\infty$

$+\infty$

0  $r_i$

**FIG. 3A**

101

x

$x \geq r_i$

$B_0 \rightarrow B_{L-1}$

$r_i$

104

102

103

x

$s_i, t_i$

105

$s_i^1, t_i^1$

106

$H_i(x)$

**FIG. 3B**

$H_0(x)$

$J_0(s_0 t_0)$

$-\infty$

$+\infty$

0  x

**FIG. 4A**

3

x

$H_0(x)$

$B_0$

5  $s_0, t_0$

**FIG. 4B**

FIG. 5A

FIG. 5B

FIG. 5C

FIG. 5D

FIG. 6A

FIG. 6B

FIG. 6C

FIG. 6D

28

FIG.7A

FIG.7B

FIG.7C

FIG.7D

FIG. 8

FIG. 9

FIG. 10

FIG. 11A

FIG. 11B

FIG. 12A

FIG. 12B

FIG. 12C

FIG. 12D

FIG. 13A

FIG. 13B

FIG. 13C

FIG. 13D

FIG. 14

33